(19) Europäisches Patentamt
European Patent Office
Office européen des brevets

(11) **EP 3 701 232 B1**

(12) **EUROPÄISCHE PATENTSCHRIFT**

(45) Veröffentlichungstag und Bekanntmachung des Hinweises auf die Patenterteilung:
**03.05.2023   Patentblatt 2023/18**

(21) Anmeldenummer: **18782406.5**

(22) Anmeldetag: **02.10.2018**

(51) Internationale Patentklassifikation (IPC):
**G01F 1/84** *(2006.01)*        **G01F 25/10** *(2022.01)*

(52) Gemeinsame Patentklassifikation (CPC):
**G01F 1/8436; G01F 1/8431; G01F 1/8477; G01F 25/10**

(86) Internationale Anmeldenummer:
**PCT/EP2018/076814**

(87) Internationale Veröffentlichungsnummer:
**WO 2019/081170 (02.05.2019 Gazette 2019/18)**

(54) **CORIOLIS-MASSEDURCHFLUSSMESSGERÄT MIT ZWEI MESSROHRPAAREN, UND VERFAHREN ZUM BESTIMMEN EINES MASSEDURCHFLUSSES**

CORIOLIS MASS FLOW METER WITH TWO PAIRS OF MEASURING TUBES, AND METHOD FOR DETERMINING A MASS FLOW RATE

DÉBITMÈTRE MASSIQUE DU TYPE CORIOLIS AVEC DEUX PAIRES DE TUBES DE MESURE, ET PROCÉDÉ DE DÉTERMINATION D'UN DÉBIT MASSIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.10.2017   DE 102017125273**

(43) Veröffentlichungstag der Anmeldung:
**02.09.2020   Patentblatt 2020/36**

(73) Patentinhaber: **Endress+Hauser Flowtec AG**
**4153 Reinach (CH)**

(72) Erfinder: **ZHU, Hao**
**85354 Freising (DE)**

(74) Vertreter: **Hahn, Christian et al**
**Endress+Hauser Group Services (Deutschland)AG +Co. KG**
**Colmarer Straße 6**
**79576 Weil am Rhein (DE)**

(56) Entgegenhaltungen:
**DE-A1-102004 035 971     US-A1- 2009 272 173**

**Beschreibung**

Die vorliegende Erfindung betrifft ein Massedurchflussmessgerät nach dem Coriolis-Prinzip mit mindestens zwei Messrohrpaaren, wobei die beiden Messrohrpaare voneinander abweichende Nutzmodeeigenfrequenzen für einen jeweiligen Biegeschwingungsnutzmode aufweisen, sowie ein Verfahren zum Bestimmen des Massedurchflusses.

DE 10 2004 035 971 A1 offenbart ein Massedurchflussmessgerät mit zwei Paaren gebogener Messrohre, die im Wesentlichen parallel zueinander verlaufen.

US 2009 / 272 173 A1 offenbart ein Massedurchflussmessgerät mit zwei Messrohren, deren Durchflussraten sich unterscheiden können. Mehrere Sensoren teilen sich gemeinsame Signalleitungen.

Ein gattungsgemäßes Massedurchflussmessgerät ist beschrieben in DE 10 2015 104 931 A1. Die abweichenden Nutzmodeeigenfrequenzen sind vorteilhaft, um ein Übersprechen zwischen den Schwingungen der Messrohrpaare zu minimieren.

Die Messrohrpaare weisen jeweils einen elektrodynamischen Erreger zum Anregen von Biegeschwingungen und jeweils zwei Schwingungssensoren zum Erfassen der Biegeschwingungen auf, wobei die Schwingungssensoren eines Messrohrpaares jeweils einlaufseitig und auslaufseitig angeordnet sind. Grundsätzlich kann jedes Messrohrpaar für sich mit einer unabhängigen Betriebs- und Auswertungsschaltung zum Treiben des Erregers und zum Erfassen von Sensorsignalen ausgerüstet sein, was jedoch den Schaltungsaufwand gegenüber einem herkömmlichen Massedurchflussmessgerät mit nur einem Messrohrpaar erheblich vergrößert. Es ist daher anzustreben nur eine Betriebs- und Auswerteschaltung vorzusehen, welche die Erreger beider Messrohrpaare über eine gemeinsame Erregerleiterschleife treibt und die Signale der einlaufseitigen Schwingungssensoren beider Messrohrpaare sowie die die Signale der auslaufseitigen Schwingungssensoren beider Messrohrpaare jeweils über eine einlaufseitige bzw. auslaufseitige Sensorleiterschleife erfasst.

Hierbei kann es aufgrund der unterschiedlichen Eigenfrequenzen in Kombination mit Fertigungstoleranzen zu einem Nullpunktfehler kommen, wie im Folgenden erläutert wird.

Bei Massedurchflussmessgeräten nach dem Coriolis-Prinzip wird eine Phasenverschiebung durchflussproportionale Phasenverschiebung zwischen den Signalen eines einlaufseitigen Schwingungssensors und eines auslaufseitigen Schwingungssensors erfasst. Hierzu wird insbesondere die Phasendifferenz der jeweiligen Maxima der Signale beim Durchlaufen der Ruhelage erfasst.

Fertigungstoleranzen können dazu führen, dass die einlaufseitigen und auslaufseitigen Schwingungssensoren unterschiedlich empfindlich sind und damit bei gleichem Schwingungsverhalten unterschiedliche Signalamplituden aufweisen. Bei einem Massedurchflussmessgerät mit nur einem Messrohrpaar ist das insoweit unterschädlich, als die Signale durch Amplitudenvariationen keine Phasenveränderung erfahren. Dies ändert sich bei der Überlagerung der Sensorsignale zweier Messrohrpaare mit unterschiedlicher Eigenfrequenzen. Die Biegeschwingungsnutzmode eines Messrohrpaares wird mit deren Nutzmodeeigenfrequenz angeregt. Dies führt zu einer maximalen Amplitude und zu einem Phasenwinkel von $\pi/2$ zwischen dem Erregersignal und der Auslenkung. Da beim oben beschriebenen Aufbau die Erreger beider Messrohrpaare über eine gemeinsame Erregerleiterschleife getrieben werden, wird jedes Messrohrpaar auch mit der Eigenfrequenz der Biegeschwingungsnutzmode des jeweils anderen Messrohrpaares mit dessen abweichender Nutzmodeeigenfrequenz angeregt. Das führt was zu einer überlagerten Schwingung außer Resonanz mit einer erheblich geringeren Amplitude und einem Phasenwinkel von 0 bzw. $\pi$ zwischen dem Erregersignal und der Auslenkung. Die überlagerte Schwingung eines Messrohrpaares bei der Nutzmodeeigenfrequenz des anderen Messrohrpaares weist also gegenüber dessen Schwingung in Resonanz eine Phasenverschiebug um $\pm \pi/2$ auf. Da die Signale Schwingungssensoren beider Messrohrpaare über gemeinsame Sensorleiterschleifen erfasst werden, sind bei der Nutzmodeeigenfrequenz eines Messrohrpaares die Signale der Schwingungssensoren dieses in Resonanz schwingenden Messrohrpaares sowie die Signale der Schwingungssensoren der erzwungenen Schwingungen des anderen Messrohrpaares überlagert, wobei letztere um $\pm \pi/2$ gegenüber ersteren verschoben sind.

Die Überlagerung von Sensorsignalen zweier Messrohrpaare mit unterschiedlichen Amplitudenverhältnissen, zwischen einlaufseitigen und auslaufseitigen Sensoren, kann daher zu einer Phasendifferenz zwischen den Signalen führen, die einen Nullpunktfehler des Massedurchflussmessgerätes bewirken.

Es ist daher die Aufgabe der vorliegenden Erfindung, hier Abhilfe zu schaffen.

Die Aufgabe wird erfindungsgemäß gelöst durch das Massedurchflussmessgerät gemäß dem unabhängigen Patentanspruch 1 und durch das Verfahren nach Anspruch 10.

Das erfindungsgemäße Massedurchflussmessgerät nach dem Coriolis-Prinzip, zum Bestimmen eines Massedurchflussmesswerts eines das Massedurchflussmessgerät durchströmenden Mediums umfasst: ein erstes Messrohrpaar mit zwei gegeneinander schwingfähig gelagerten Messrohren mit einer Biegeschwingungsnutzmode, die eine erste medienabhängige Nutzmodeeigenfrequenz f1 aufweist; einen ersten elektrodynamischen Erreger zum Anregen von Biegeschwingungen zwischen den Messrohren des ersten Messrohrpaares, ein erstes Schwingungssensorpaar mit einem ersten einlaufseitigen Schwingungssensor und einem ersten auslaufseitigen Schwingungssensor zum Erfassen von Biegeschwingungen an zwei Positionen des ersten Messrohrpaares; ein zweites Messrohrpaar mit zwei gegeneinander schwingfähig gelagerten Messrohren mit einer Biegeschwingungsnutzmode, die eine zweite medienabhängige Nutzmodeeigenfrequenz f2 aufweist, einen zweiten elektrodynamischen Erreger zum Anregen von Biegeschwingungen zwischen den Messrohren des zweiten Messrohrpaares; ein zweites Schwingungssensorpaar mit einem zweiten einlaufseitigen Schwingungssensor und einem zweiten auslaufseitigen Schwingungssensor zum Erfassen von Biegeschwingungen an zwei Positionen des zweiten Messrohrpaares; eine Betriebs- und Auswerteschaltung; zum Treiben des ersten und zweiten elektrodynamischen Erregers mit einem gemeinsamen Erregersignal und zum Erfassen von Signalen der Schwingungssensoren; zum Ermitteln von durchflussabhängigen Phasendifferenzen zwischen den Signalen der einlaufseitigen und auslaufseitigen Schwingungssensoren eines der Schwingungssensorpaare und zum Ermitteln von Massedurchflussmesswerten auf Basis dieser durchflussabhängigen Phasendifferenzen; wobei das Erregersignal zum Anregen der Biegeschwingungsnutzmoden beider Messrohrpaare dient; wobei ein Erregersignalpfad dazu eingerichtet ist, das Erregersignal zum ersten und zweiten elektrodynamischen Erreger zu übertragen; wobei ein einlaufseitiger Sensorsignalpfad dazu eingerichtet ist, Signale des ersten und des zweiten einlaufseitigen Schwingungssensors überlagert zu übertragen; wobei ein auslaufseitiger Sensorsignalpfad dazu eingerichtet ist, Signale des ersten und des zweiten auslaufseitigen Schwingungssensors überlagert zu übertragen; wobei die Sensorsignale bei Schwingungen mit der der ersten Nutzmodeeigenfrequenz f1 ein erstes Signalamplitudenverhältnis zwischen den Signalen der einlaufseitigen Sensoren und den Signalen der auslaufseitigen Sensoren aufweisen, wobei die Sensorsignale bei Schwingungen mit der der zweiten Nutzmodeeigenfrequenz f2 ein zweites Signalamplitudenverhältnis zwischen den Signalen der einlaufseitigen Sensoren und den Signalen der auslaufseitigen Sensoren aufweisen, wobei das zweite Signalamplitudenverhältnis aufgrund von Fertigungstoleranzen vom ersten Signalamplitudenverhältnis abweichen kann, wobei die Betriebs- und Auswerteschaltung dazu eingerichtet ist, beim Ermitteln der Massedurchflussmesswerte auf Basis von durchflussabhängigen Phasendifferenzen eine Nullpunktkorrektur für das erste Messrohrpaar und/oder das zweite Messrohrpaar unter Berücksichtigung des ersten und zweiten Signalamplitudenverhältnisses durchzuführen, wobei die Betriebs- und Auswerteschaltung dazu eingerichtet ist, die Nullpunktkorrektur für das erste Messrohrpaar und/oder das zweite Messrohrpaar in Abhängigkeit von einer Abweichung der Signalamplitudenverhältnisse zueinander durchzuführen.

Zum ersten und zweiten Signalamplitudenverhältnis äquivalent im Sinne der Erfindung sind beispielsweise das Verhältnis der Signalamplitude des einlaufseitigen Sensors des ersten Messrohrpaares zur Signalamplitude des einlaufseitigen Sensors des zweiten Messrohrpaares zusammen mit dem Verhältnis der Signalamplitude des auslaufseitigen Sensors des ersten Messrohrpaares zur Signalamplitude des auslaufseitigen Sensors des zweiten Messrohrpaares.

In einer Weiterbildung der Erfindung weist die Nullpunktkorrektur für das erste Messrohrpaar einen Term auf, der abhängt von den aktuellen Schwingungsamplituden der Schwingungssensoren des zweiten Messrohrpaares bei der ersten Nutzmodeeigenfrequenz f1 im Verhältnis zu den aktuellen Schwingungsamplituden der Schwingungssensoren des ersten Messrohrpaares bei der ersten Nutzmodeeigenfreqenz.

In einer Weiterbildung der Erfindung weist die Nullpunktkorrektur für das zweite Messrohrpaar einen Term auf, der abhängt von den aktuellen Schwingungsamplituden der Schwingungssensoren des ersten Messrohrpaares bei der zweiten Nutzmodeeigenfreqenz im Verhältnis zu den aktuellen Schwingungsamplituden der Schwingungssensoren des zweiten Messrohrpaares bei der zweiten Nutzmodeeigenfreqenz.

In einer Weiterbildung der Erfindung ist die Betriebs- und Auswerteschaltung dazu eingerichtet, zur Ermittlung der Schwingungsamplituden der Schwingungssensoren des ersten Messrohrpaares eine mittlere Sensoramplitudenfunktion $A_1'(f_1, f_2, I_2)$ bei der Nutzmodeeigenfrequenz des zweiten Messrohrpaares abzuschätzen, wobei $f_1$, $f_2$ die Resonanzfrequenzen der Biegeschwingungsnutzmoden des ersten und zweiten Messrohrpaares sind, wobei $I_2$ ein Erregerstromsignal mit der Nutzmodeeigenfrequenz des zweiten Messrohrpaars $f_2$ ist, wobei die Amplituden des einlaufseitigen und auslaufseitigen Schwingungssensors als proportional zur mittleren Sensoramplitudenfunktion ermittelt werden,

In einer Weiterbildung der Erfindung ist die Betriebs- und Auswerteschaltung dazu eingerichtet, zur Ermittlung der Schwingungsamplituden der Schwingungssensoren des zweiten Messrohrpaares eine mittlere Sensoramplitudenfunktion $A_2'(f_2, f_1, I_1)$ bei der Nutzmodeeigenfrequenz des ersten Messrohrpaares abzuschätzen, wobei $f_2$, $f_1$ die Resonanzfrequenzen der Biegeschwingungsnutzmoden des zweiten und ersten Messrohrpaares sind, wobei $I_1$ ein Erregerstromsignal mit der Nutzmodeeigenfrequenz des ersten Messrohrpaars $f_1$ ist, wobei die Amplituden des einlaufseitigen und auslaufseitigen Schwingungssensors als proportional zur mittleren Sensoramplitudenfunktion ermittelt werden.

In einer Weiterbildung der Erfindung ist die Betriebs- und Auswerteschaltung dazu eingerichtet, eine Schwingungsamplitude $A_{in,1}'$ eines einlaufseitigen Sensors eines ersten Messrohrpaares bei der Resonanzfrequenz des zweiten Messrohrpaares abzuschätzen gemäß:

$$A'_{in,1} = A'_1(f_1, f_2, I_2) \cdot \frac{2 \cdot A_{in,1}}{A_{in,1} + A_{out,1}},$$

und eine Schwingungsamplitude A'$_{out,1}$ eines auslaufseitigen Sensors eines ersten Messrohrpaares bei der Resonanzfrequenz des zweiten Messrohrpaares abzuschätzen gemäß:

$$A'_{out,1} = A'_1(f_1, f_2, I_2) \cdot \frac{2 \cdot A_{out,1}}{A_{in,1} + A_{out,1}},$$

wobei A'$_1$(f$_1$, f$_2$, I$_2$) die frequenzabhängige und erregerstromabhängige, mittlere Sensoramplitudenfunktion für das erste Messrohrpaar ist, und wobei $A_{in,1}$ und $A_{out,1}$ die Sensorsignalamplituden der einlaufseitigen bzw. auslaufseitigen Sensoren bei der ersten Resonanzfrequenz sind.

In einer Weiterbildung der Erfindung ist die Betriebs- und Auswerteschaltung dazu eingerichtet, eine Schwingungsamplitude A'$_{in,2}$ eines einlaufseitigen Sensors eines zweiten Messrohrpaares bei der Resonanzfrequenz des ersten Messrohrpaares abzuschätzen gemäß:

$$A'_{in,2} = A'_2(f_2, f_1, I_1) \cdot \frac{2 \cdot A_{in,2}}{A_{in,2} + A_{out,2}},$$

und eine Schwingungsamplitude A'$_{out,2}$ eines auslaufseitigen Sensors eines zweiten Messrohrpaares bei der Resonanzfrequenz des ersten Messrohrpaares abzuschätzen gemäß:

$$A'_{out,2} = A'_2(f_2, f_1, I_1) \cdot \frac{2 \cdot A_{out,2}}{A_{in,2} + A_{out,2}},$$

A'$_2$(f$_2$,f$_1$,I$_1$) die frequenzabhängige und erregerstromabhängige, mittlere Sensoramplitudenfunktion für das zweite Messrohrpaar ist, und wobei $A_{in,2}$ und $A_{out,2}$ die Sensorsignalamplituden der einlaufseitigen bzw. auslaufseitigen Sensoren bei der Resonanzfrequenz des zweiten Messrohrpaars sind.

In einer Weiterbildung der Erfindung ist die Betriebs- und Auswerteschaltung dazu eingerichtet,

eine Signalamplitude der einlaufseitigen Sensoren bei der ersten Nutzmodeeigenfrequenz f1 normiert mit einer Empfindlichkeitskonstanten und der ersten Nutzmodeeigenfrequenz f1 als Maß für die Schwingungsamplitude $A_{in1}$ des ersten einlaufseitigen Sensors zu verwenden, und eine Signalamplitude der auslaufseitigen Sensoren bei der ersten Nutzmodeeigenfrequenz f1 normiert mit einer Empfindlichkeitskonstanten und der ersten Nutzmodeeigenfrequenz f1 als Maß für die Schwingungsamplitude $A_{out1}$ des ersten auslaufseitigen Sensors zu verwenden; und/oder

eine Signalamplitude der einlaufseitigen Sensoren bei der zweiten Nutzmodeeigenfrequenz f2 normiert mit einer Empfindlichkeitskonstanten und der Nutzmodeeigenfrequenz f2 als Maß für die Schwingungsamplitude $A_{in2}$ des zweiten einlaufseitigen Sensors zu verwenden, und eine Signalamplitude der auslaufseitigen Sensoren bei der zweiten Nutzmodeeigenfrequenz f2 normiert mit einer Empfindlichkeitskonstanten und der zweiten Nutzmodeeigenfrequenz f2 als Maß für die Schwingungsamplitude $A_{out2}$ des zweiten auslaufseitigen Sensors zu verwenden;

In einer Weiterbildung der Erfindung ist die mittlere Sensoramplitudenfunktion A'$_1$(f$_1$, f$_2$, I$_2$) für das erste Messrohrpaar gegeben als:

$$A'_1 = \frac{e_{D,1} \cdot I_2 \cdot k_{N,1}}{\left| 1 - \left( \frac{f_2}{f_1} \right)^2 \right|},$$

wobei e$_{D,1}$ eine Erregereffektivität für das erste Messrohrpaar und k$_{N,1}$ eine Nachgiebigkeit des ersten Messrohrpaares für die Biegeschwingungsnutzmode ist.

In einer Weiterbildung der Erfindung ist die mittlere Sensoramplitudenfunktion A'$_2$(f$_2$, f$_1$, I$_1$) für das zweite Messrohrpaar gegeben als:

$$A'_2 = \frac{e_{D,2} \cdot I_1 \cdot k_{N,2}}{\left| 1 - \left( \frac{f_1}{f_2} \right)^2 \right|},$$

wobei $e_{D,2}$ eine Erregereffektivität für das zweite Messrohrpaar und $k_{N,2}$ eine Nachgiebigkeit des zweiten Messrohrpaares für die Biegeschwingungsnutzmode ist.

In einer Weiterbildung der Erfindung ist die Betriebs und Auswerteschaltung dazu eingerichtet, für das Verhältnis der Schwingungsamplituden einen Wert zu ermitteln, der eine Funktion von einem Verhältnis der Nutzmodeeigenfrequenzen zueinander und von einem Qualitätsfaktor ist, der die medienabhängige Güte einer der Biegeschwingungsnutzmoden indiziert.

In einer Weiterbildung der Erfindung ist die Betriebs und Auswerteschaltung dazu eingerichtet, den Qualitätsfaktor als eine Funktion der Amplitude der überlagerten Signale der einlaufseitigen oder auslaufseitigen Sensoren bei einer Schwingung eines Messrohrpaares in einer Biegeschwingungsnutzmode bei der zugehörigen Nutzmodeeigenfrequenz und einer Amplitude des Erregersignals, insbesondere des Erregerstroms, oder einer Amplitude eines das Erregersignal steuernden Steuersignals bei der Nutzmodeeigenfrequenz zu ermitteln.

In einer Weiterbildung der Erfindung hängt die mittlere Sensoramplitudenfunktion $A'_1(f_1, f_2, I_2)$ für das erste Messrohrpaar weiterhin von der Güte $Q_1$ des ersten Messrohrpaares ab und ist gegeben als:

$$A'_1(f_1, f_2, I_2, Q_1) = \frac{e_{D,1} \cdot I_2 \cdot k_{N,1}}{\left[\left(1 - \left(\frac{f_2}{f_1}\right)^2\right)^2 + \left(\frac{\left(\frac{f_2}{f_1}\right)}{Q_1}\right)^2\right]^{1/2}},$$

wobei $e_{D,1}$ eine Erregereffektivität für das erste Messrohrpaar und $k_{N,1}$ eine Nachgiebigkeit des ersten Messrohrpaares für die Biegeschwingungsnutzmode ist,

und wobei die Güte $Q_1$ des ersten Messrohrpaares bestimmbar ist als:

$$Q_1 = \frac{A_{in1} + A_{out1}}{2 \cdot e_{D,1} \cdot I_1 \cdot k_{N,1}}.$$

In einer Weiterbildung der Erfindung hängt die mittlere Sensoramplitudenfunktion $A'_2(f_2, f_1, I_1)$ für das zweite Messrohrpaar weiterhin von der Güte $Q_2$ des zweiten Messrohrpaares ab und ist gegeben als:

$$A'_2(f_2, f_1, I_1, Q_2) = \frac{e_{D,2} \cdot I_1 \cdot k_{N,2}}{\left[\left(1 - \left(\frac{f_1}{f_2}\right)^2\right)^2 + \left(\frac{\left(\frac{f_1}{f_2}\right)}{Q_2}\right)^2\right]^{1/2}},$$

wobei $e_{D,2}$ eine Erregereffektivität für das zweite Messrohrpaar und $k_{N,2}$ eine Nachgiebigkeit des zweiten Messrohrpaares für die Biegeschwingungsnutzmode ist,

und wobei die Güte $Q_2$ des zweiten Messrohrpaares bestimmbar ist als:

$$Q_2 = \frac{A_{in2} + A_{out2}}{2 \cdot e_{D,2} \cdot I_2 \cdot k_{N,2}}.$$

In einer Weiterbildung der Erfindung ist die Betriebs- und Auswerteschaltung dazu eingerichtet, einen Proportionalitätsfaktor $F_{1-2}$ des Nullpunktfehlerbeitrags des ersten Messrohrpaares zum Nullpunktfehler des zweiten Messrohrpaares zu ermitteln gemäß:

$$F_{1-2} = \frac{A'_{in,1}}{A_{in,2}} - \frac{A'_{out,1}}{A_{out,2}}$$

bzw:

$$F_{1-2} = \frac{2 A'_1}{A_{in,1} + A_{out,1}} \cdot \left(\frac{A_{in,1}}{A_{in,2}} - \frac{A_{out,1}}{A_{out,2}}\right).$$

In einer Weiterbildung der Erfindung ist die Betriebs- und Auswerteschaltung ist dazu eingerichtet, einen Proportionalitätsfaktor $F_{2-1}$ des Nullpunktfehlerbeitrags des zweiten Messrohrpaares zum Nullpunktfehler des ersten Messrohrpaares zu ermitteln gemäß:

$$F_{2-1} = \frac{A'_{in,2}}{A_{in,1}} - \frac{A'_{out,2}}{A_{out,1}}$$

bzw:

$$F_{2-1} = \frac{2\,A'_2}{A_{in,2} + A_{out,2}} \cdot \left( \frac{A_{in,2}}{A_{in,1}} - \frac{A_{out,2}}{A_{out,1}} \right).$$

In einer Weiterbildung der Erfindung ist die Betriebs- und Auswerteschaltung dazu eingerichtet, eine dem Nullpunktfehlerbeitrag des ersten Messrohrpaares zum Nullpunktfehler des zweiten Messrohrpaares entsprechende Verzögerungszeit $\tau_{1-2}$ zu berechnen gemäß:

$$\tau_{1-2} = \frac{F_{1-2}}{2\pi \cdot f_2},$$

und/oder
die Betriebs- und Auswerteschaltung ist dazu eingerichtet, eine dem Nullpunktfehlerbeitrag des zweiten Messrohrpaares zum Nullpunktfehler des ersten Messrohrpaares entsprechende Verzögerungszeit $\tau_{2-1}$ zu berechnen gemäß:

$$\tau_{2-1} = \frac{F_{2-1}}{2\pi \cdot f_1},$$

In einer Weiterbildung der Erfindung ist die Betriebs- und Auswerteschaltung dazu eingerichtet, im Messbetrieb ermittelte durchflussabhängigen Verzögerungszeiten zwischen den Sensorsignalen bei den Nutzmodeeigenfrequenzen des ersten und zweiten Messrohrpaares $\tau_{m1}$, $\tau_{m2}$ um die Nullpunktverzögerungszeiten $\tau_{1-2}$, $\tau_{2-1}$ zu korrigieren, um auf der Basis der korrigierten Verzögerungszeiten $\tau_{korr1}$, $\tau_{korr2}$ den Massendurchfluss durch das jeweilige Messrohrpaar zu berechnen, wobei $\tau_{korr1} = \tau_{m1} - \tau_{m2-1}$ und $\tau_{korr2} = \tau_{m2} - \tau_{m1-2}$.
In einer Weiterbildung der Erfindung ist eine relative Abweichung A zwischen der ersten Nutzmodeeigenfrequenz f1 und die zweiten Nutzmodeeigenfrequenz f2 gegeben als:

$$A = 2 \cdot \left| \frac{f1 - f2}{f1 + f2} \right|,$$

wobei gilt: A > 4%, beispielsweise A > 8% und insbesondere A > 16%.
Insofern als die Messrohrpaare eine sehr hohe Güte Q mit Q > 100, meistens Q > 1000 aufweisen, schwingen die Messrohrpaare bei der hier definierten Frequenzabweichung A praktisch unabhängig voneinander. Zudem sind bei einer solchen Frequenzabweichung die störenden Signale der Schwingungssensoren des außer Resonanz schwingenden Messrohrpaares zuverlässig um $\pm\ \pi/2$ gegenüber den Signalen der Sensoren des in Resonanz schwingenden Messrohrpaares verschoben. Dieser Phasenverschiebungswinkel entfällt also als weiterer Freiheitsgrad, der eine Nullpunktkorrektur noch erschweren könnte.
Das erfindungsgemäße Verfahren dient dem Bestimmen eines Massedurchflussmesswerts eines ein nach dem Coriolis-Prinzip arbeitenden Massedurchflussmessgerät durchströmenden Mediums, insbesondere nach einem der vorhergehenden Ansprüche, wobei das Messgerät zwei Messrohrpaare mit jeweils zwei gegeneinander schwingfähig gelagerten Messrohren mit einer Biegeschwingungsnutzmode aufweist, wobei die Biegeschwingungsnutzmoden der beiden Messrohrpaare voneinander abweichende Nutzmodeeigenfrequenzen (f1, f2), aufweisen, wobei die beiden Messrohrpaare jeweils einen elektrodynamischen Erreger zum Anregen von Biegeschwingungen zwischen den Messrohren eines Messrohrpaares aufweisen, wobei die beiden Erreger über eine Erregerleiterschleife in Reihe geschaltet sind, wobei die Messrohrpaare jeweils ein Schwingungssensorpaar mit einem einlaufseitigen Schwingungssensor und einem auslaufseitigen Schwingungssensor zum Erfassen von Biegeschwingungen an zwei Positionen eines Messrohrpaares aufweisen; wobei ein einlaufseitiger Sensorsignalpfad dazu eingerichtet ist, Signale der einlaufseitigen Schwingungssensoren überlagert zu übertragen, wobei ein auslaufseitiger Sensorsignalpfad dazu eingerichtet ist, Signale der auslaufseitigen Schwingungssensoren überlagert zu übertragen, wobei das Verfahren die folgenden Schritte aufweist:

Treiben der beiden elektrodynamischen Erreger mit einem gemeinsamen Erregersignal, wobei das Erregersignal zum Anregen der Biegeschwingungsnutzmoden beider Messrohrpaare dient; Erfassen von überlagerten Sensorsignalen, der beiden einlaufseitigen Schwingungssensoren; Erfassen von überlagerten Signalen, der beiden auslaufseitigen Schwingungssensoren; Ermitteln von durchflussabhängigen Phasendifferenzen zwischen den Signalen der einlaufseitigen und auslaufseitigen Schwingungssensoren der Schwingungssensorpaare und zum Ermitteln von Massedurchflussmesswerten auf Basis dieser durchflussabhängigen Phasendifferenzen; wobei die Sensorsignale bei Schwingungen mit der der ersten Nutzmodeeigenfrequenz f1 ein erstes Signalamplitudenverhältnis zwischen den Signalen der einlaufseitigen Sensoren und den Signalen der auslaufseitigen Sensoren aufweisen, wobei die Sensorsignale bei Schwingungen mit der der zweiten Nutzmodeeigenfrequenz f2 ein zweites Signalamplitudenverhältnis zwischen den Signalen der einlaufseitigen Sensoren und den Signalen der auslaufseitigen Sensoren aufweisen, wobei das zweite Signalamplitudenverhältnis aufgrund von Fertigungstoleranzen vom ersten Signalamplitudenverhältnis abweichen kann, Durchführen einer Nullpunktkorrektur für ein erstes der Messrohrpaare und/oder ein zweites der Messrohrpaare unter Berücksichtigung des ersten und zweiten Signalamplitudenverhältnisses beim Ermitteln der Massedurchflussmesswerte auf Basis von durchflussabhängigen Phasendifferenzen, wobei die Nullpunktkorrektur für das erste Messrohrpaar und/oder das zweite Messrohrpaar in Abhängigkeit von einer Abweichung der Signalamplitudenverhältnisse zueinander erfolgt.

In einer Weiterbildung der Erfindung weist die Nullpunktkorrektur für das erste Messrohrpaar einen Term auf, der abhängt von den aktuellen Schwingungsamplituden der Schwingungssensoren des zweiten Messrohrpaares bei der ersten Nutzmodeeigenfrequenz f1 im Verhältnis zu den aktuellen Schwingungsamplituden der Schwingungssensoren des ersten Messrohrpaares bei der ersten Nutzmodeeigenfreqenz, und/oder

In einer Weiterbildung der Erfindung weist die Nullpunktkorrektur für das zweite Messrohrpaar einen Term auf, der abhängt von den aktuellen Schwingungsamplituden der Schwingungssensoren des ersten Messrohrpaares bei der zweiten Nutzmodeeigenfreqenz im Verhältnis zu den aktuellen Schwingungsamplituden der Schwingungssensoren des zweiten Messrohrpaares bei der zweiten Nutzmodeeigenfreqenz.

In einer Weiterbildung der Erfindung wird zur Ermittlung der Schwingungsamplituden der Schwingungssensoren des ersten Messrohrpaares eine mittlere Sensoramplitudenfunktion $A_1'(f_1, f_2, I_2)$ bei der Nutzmodeeigenfrequenz des zweiten Messrohrpaares abgeschätzt, wobei $f_1$, $f_2$ die Resonanzfrequenzen der Biegeschwingungsnutzmoden des ersten und zweiten Messrohrpaares sind, wobei $I_2$ ein Erregerstromsignal mit der Nutzmodeeigenfrequenz des zweiten Messrohrpaars $f_2$ ist, wobei die Amplituden des einlaufseitigen und auslaufseitigen Schwingungssensors als proportional zur mittleren Sensoramplitudenfunktion ermittelt werden.

In einer Weiterbildung der Erfindung wird Schwingungsamplituden der Schwingungssensoren des zweiten Messrohrpaares eine mittlere Sensoramplitudenfunktion $A_2'(f_2, f_1, I_1)$ bei der Nutzmodeeigenfrequenz des ersten Messrohrpaares abgeschätzt, wobei $f_2$, $f_1$ die Resonanzfrequenzen der Biegeschwingungsnutzmoden des zweiten und ersten Messrohrpaares sind, wobei $I_1$ ein Erregerstromsignal mit der Nutzmodeeigenfrequenz des ersten Messrohrpaars $f_1$ ist, wobei die Amplituden des einlaufseitigen und auslaufseitigen Schwingungssensors als proportional zur mittleren Sensoramplitudenfunktion ermittelt werden.

In einer Weiterbildung der Erfindung wird eine Schwingungsamplitude $A_{in,1}'$ eines einlaufseitigen Sensors eines ersten Messrohrpaares bei der Resonanzfrequenz des zweiten Messrohrpaares abgeschätzt gemäß:

$$A_{in,1}' = A_1'(f_1, f_2, I_2) \cdot \frac{2 \cdot A_{in,1}}{A_{in,1} + A_{out,1}},$$

und eine Schwingungsamplitude $A_{out,1}'$ eines auslaufseitigen Sensors eines ersten Messrohrpaares bei der Resonanzfrequenz des zweiten Messrohrpaares abgeschätzt wird gemäß:

$$A_{out,1}' = A_1'(f_1, f_2, I_2) \cdot \frac{2 \cdot A_{out,1}}{A_{in,1} + A_{out,1}},$$

wobei $A_1'(f_1, f_2, I_2)$ die frequenzabhängige und erregerstromabhängige, mittlere Sensoramplitudenfunktion für das erste Messrohrpaar ist, und wobei $A_{in,1}$ und $A_{out,1}$ die Sensorsignalamplituden der einlaufseitigen bzw. auslaufseitigen Sensoren bei der ersten Resonanzfrequenz sind,

In einer Weiterbildung der Erfindung wird eine Schwingungsamplitude $A_{in,2}'$ eines einlaufseitigen Sensors eines zweiten Messrohrpaares bei der Resonanzfrequenz des ersten Messrohrpaares abgeschätzt gemäß:

$$A'_{in,2} = A'_2(f_2, f_1, I_1) \cdot \frac{2 \cdot A_{in,2}}{A_{in,2} + A_{out,2}},$$

und eine Schwingungsamplitude $A'_{out,2}$ eines auslaufseitigen Sensors eines zweiten Messrohrpaares bei der Resonanzfrequenz des ersten Messrohrpaares abgeschätzt wird gemäß:

$$A'_{out,2} = A'_2(f_2, f_1, I_1) \cdot \frac{2 \cdot A_{out,2}}{A_{in,2} + A_{out,2}},$$

wobei $A'_2(f_2, f_1, I_1)$ die frequenzabhängige und erregerstromabhängige, mittlere Sensoramplitudenfunktion für das zweite Messrohrpaar ist, und wobei $A_{in,2}$ und $A_{out,2}$ die Sensorsignalamplituden der einlaufseitigen bzw. auslaufseitigen Sensoren bei der Resonanzfrequenz des zweiten Messrohrpaars sind.

In einer Weiterbildung der Erfindung wird ein Proportionalitätsfaktor $F_{1-2}$ des Nullpunktfehlerbeitrags des ersten Messrohrpaares zum Nullpunktfehler des zweiten Messrohrpaares ermittelt gemäß:

$$F_{1-2} = \frac{A'_{in,1}}{A_{in,2}} - \frac{A'_{out,1}}{A_{out,2}} \text{ bzw.} F_{1-2} = \frac{2\,A'_1}{A_{in,1} + A_{out,1}} \cdot \left( \frac{A_{in,1}}{A_{in,2}} - \frac{A_{out,1}}{A_{out,2}} \right).$$

In einer Weiterbildung der Erfindung wird ein Proportionalitätsfaktor $F_{2-1}$ des Nullpunktfehlerbeitrags des zweiten Messrohrpaares zum Nullpunktfehler des ersten Messrohrpaares ermittelt wird gemäß:

$$F_{2-1} = \frac{A'_{in,2}}{A_{in,1}} - \frac{A'_{out,2}}{A_{out,1}} \text{ bzw. } F_{2-1} = \frac{2\,A'_2}{A_{in,2} + A_{out,2}} \cdot \left( \frac{A_{in,2}}{A_{in,1}} - \frac{A_{out,2}}{A_{out,1}} \right).$$

In einer Weiterbildung der Erfindung wird eine dem Nullpunktfehlerbeitrag des ersten Messrohrpaares zum Nullpunktfehler des zweiten Messrohrpaares entsprechende Nullpunktverzögerungszeit $\tau_{1-2}$ berechnet gemäß:

$$\tau_{1-2} = \frac{F_{1-2}}{2\pi \cdot f_2},$$

In einer Weiterbildung der Erfindung wird eine dem Nullpunktfehlerbeitrag des zweiten Messrohrpaares zum Nullpunktfehler des ersten Messrohrpaares entsprechende Nullpunktverzögerungszeit $\tau_{2-1}$ berechnet wird gemäß:

$$\tau_{2-1} = \frac{F_{2-1}}{2\pi \cdot f_1}.$$

In einer Weiterbildung der Erfindung werden im Messbetrieb ermittelte durchflussabhängigen Verzögerungszeiten zwischen den Sensorsignalen bei den Nutzmodeeigenfrequenzen des ersten und zweiten Messrohrpaares $\tau_{m1}$, $\tau_{m2}$ um die Nullpunktverzögerungszeiten $\tau_{1-2}$, $\tau_{2-1}$ korrigiert werden um auf der Basis der korrigierten Verzögerungszeiten $\tau_{korr1}$, $\tau_{korr2}$ den Massendurchfluss durch das jeweilige Messrohrpaar zu berechnen, wobei $\tau_{korr1} = \tau_{m1} - \tau_{m2-1}$ und $\tau_{korr2} = Tm2 - \tau_{m1-2}$.

Die Erfindung wird nun anhand eines in den Zeichnungen dargestellten Ausführungsbeispiels näher erläutert. Es zeigt:

Fig. 1a: eine schematische Frontansicht eines ersten Ausführungsbeispiels eines erfindungsgemäßen Massedurchflussmessgerätes;

Fig. 1b: eine schematische Seitenansicht des ersten Ausführungsbeispiels eines erfindungsgemäßen Massedurchflussmessgerätes ohne Trägerrohr;

Fig. 1c: eine räumliche Darstellung des ersten Ausführungsbeispiels eines erfindungsgemäßen Massedurchflussmessgerätes ohne Trägerrohr;

Fig. 1d: eine räumliche Darstellung des ersten Ausführungsbeispiels eines erfindungsgemäßen Massedurchflussmessgerätes mit montiertem Trägerrohr;

Fig. 1e: eine schematische Darstellung der Beschaltung der Schwingungssensoren und Erreger des ersten Ausführungsbeispiels eines erfindungsgemäßen Massedurchflussmessgerätes;

Fig. 2a: einen Signalverlauf von Schwingungssensorsignalen bei gleichen Amplitudenverhältnissen für beide Messrohrpaare;

Fig. 2b: einen Signalverlauf von Schwingungssensorsignalen bei verschiedenen Amplitudenverhältnissen für die beiden Messrohrpaare;

Fig. 3a:Abweichungen des gemessenen Nullpunkts für ein erstes der Messrohrpaare bei einem Durchfluss von Null mit und ohne Korrektur des Nullpunktfehlers;

Fig. 3b:Abweichungen des gemessenen Nullpunkts für ein zweites der Messrohrpaare bei einem Durchfluss von Null mit und ohne Korrektur des Nullpunktfehlers; und

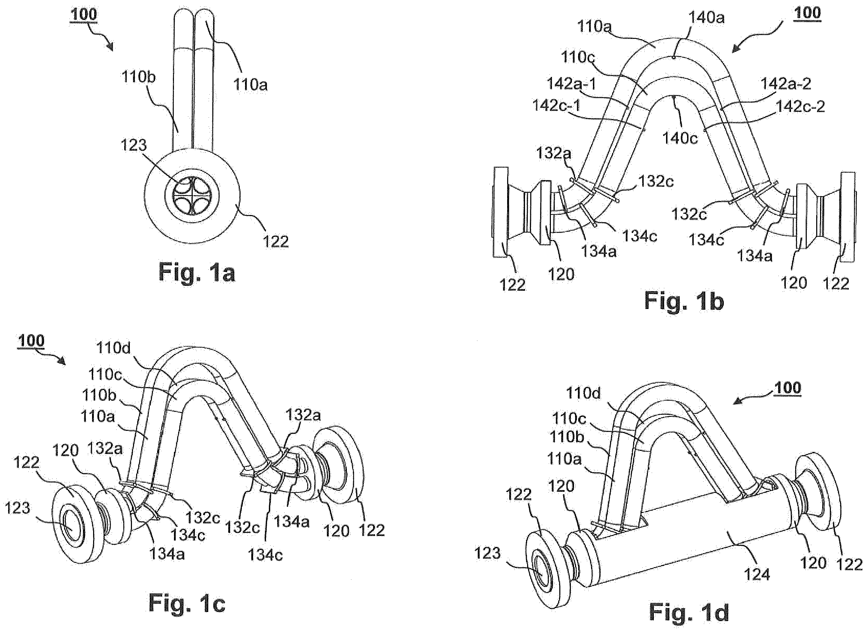

Fig. 4: ein Flussdiagramm eines Ausführungsbeispiels des erfindungsgemäßen Verfahrens:
Das in Fign. 1a bis 1d dargestellte Ausführungsbeispiel eines erfindungsgemäßen Massedurchflussmessgerätes 100 umfasst vier gebogene Messrohre 110a, 110b, 110c, 110d. Die Messrohre 110a, 110b, 110c, 110d erstrecken sich zwischen einem einlaufseitigen Sammler 120 und einem auslaufseitigen Sammler 120, und sind mit diesen fest verbunden, beispielsweise durch Einwalzen, Hartlöten oder Schweißen. Zwischen den Sammlern 120 erstreckt sich ein massives Trägerrohr 124, das mit beiden Sammlern fest verbunden ist, wodurch die Sammler 120 starr miteinander gekoppelt sind. Das Trägerrohr 124 weist an seiner Oberseite Öffnungen auf, durch welche die Messrohre 110a, 110b, 110c, 110d von den Sammlern 120 aus dem Trägerrohr 124 heraus und herein geführt sind.

Die Sammler 120 weisen endständig jeweils einen Flansch 122 auf, mittels dessen das Massedurchflussmessgerätes in einer Rohrleitung zu installieren ist. Durch zentrale Öffnungen 123 in den Flanschen 122 ist ein Massestrom durch das Massedurchflussmessgerät 100, insbesondere dessen Messrohre 110a, 110b, 110c, 110d zu führen, um den Massestrom zu messen.

Ein erstes Messrohr 110a und ein zweites Messrohr 110b sind einlaufseitig und auslaufseitig jeweils mit zwei Knotenplatten 132a, 134a verbunden, wobei durch die Position der beiden inneren der Knotenplatten 132a, also durch jene, welche einlaufseitig bzw. auslaufseitig jeweils am weitesten vom entsprechenden Sammler 120 entfernt sind, eine freie Schwingungslänge eines durch das erste Messrohr 110a, und das zweite Messrohr 110b gebildeten ersten Messrohrpaars festgelegt ist. Diese freie Schwingungslänge hat großen Einfluss auf eine Biegeschwingungsnutzmode des ersten Messrohrpaars, insbesondere auf deren Nutzmodeigenfrequenz, mit welcher das erste Messrohrpaar anzuregen ist. Entsprechend sind ein drittes Messrohr 110c und ein viertes Messrohr 110d einlaufseitig und auslaufseitig jeweils mit zwei Knotenplatten 132c, 134c verbunden, wobei durch die Position der beiden inneren der Knotenplatten 132c, eine Schwingungslänge eines durch das dritte Messrohr 110c und das vierte Messrohr 110d gebildeten zweiten Messrohrpaar festgelegt ist, welche wiederum insbesondere die Nutzmodeigenfrequenz, mit welcher das zweite Messrohrpaar anzuregen ist. Weitere Knotenplatten 134a, 134c, die jeweils zwischen den inneren Knotenplatten 132a, 132c und den Sammlern 120 angeordnet sind, dienen dazu, weitere Schwingungsknoten zu definieren, um einerseits die mechanischen Maximalspannungen an den schwingenden Messrohren zu reduzieren, und andererseits den Austausch von Schwingungsenergie zwischen dem Massedurchflussmessgerät und der Rohrleitung zu minimieren. Die freie Schwingungslänge der Messrohre 110a, 110b des ersten Messrohrpaars ist wesentlich größer als die freie Schwingungslänge der Messrohre 110c, 110d des zweiten Messrohrpaars, wobei die Messrohre 110a, 110b des ersten Messrohrpaars Oszillators in einem höheren Bogen geführt sind, als die Messrohre 110c, 110d des zweiten Messrohrpaars. Bei dem dargestellten Massedurchflussmessgerät, welches Messrohre mit einem Außendurchmesser von 3 Zoll, also etwa 76 mm und einer Wandstärke von 3,6 mm aufweist, weisen die Messrohrpaare bei einer Befüllung der Messrohre mit einem Medium mit einer Dichte von Wasser eine Nutzmodeeigenfrequenz von etwa 110 Hz und 160 Hz auf.

Zum Anregen der Biegeschwingungsnutzmoden der Messrohrpaare sind zwischen dem ersten Messrohr 110a und dem zweiten Messrohr 110b des eine erste Erregeranordnung 140a und zwischen dem dritten Messrohr 110c und dem vierten Messrohr 110d eine zweite Erregeranordnung 140c vorgesehen, beispielsweise jeweils eine induktive Erregeranordnung, die eine Tauchspule an einem Messrohr und einen Tauchkörper am gegenüberliegenden Messrohr des Messrohrpaares umfasst.

Zum Erfassen der Schwingungen der Messrohrpaare der Mesrohrpaare sind in Längsrichtung symmetrisch zu den Erregeranordnungen 140a, 140c jeweils eine erste Sensoranordnung 142a-1, 142a-2 und eine zweite Sensoranordnung 142c-1, 142c-2 mit jeweils einem einlaufseitigen und einem auslaufseitigen Schwingungssensor vorgesehen, die jeweils als induktive Anordnung mit einer Tauchspule an einem Messrohr und einem Tauchkörper am anderen Messrohr gestaltet sind. Einzelheiten dazu sind dem Fachmann bekannt, und brauchen hier nicht näher erläutert zu werden. Im Sinne der Übersichtlichkeit wurden die Positionen der Erregeranordnung und der Sensoranordnungen lediglich in Fig. 1b dargestellt und mit Bezugszeichen versehen.

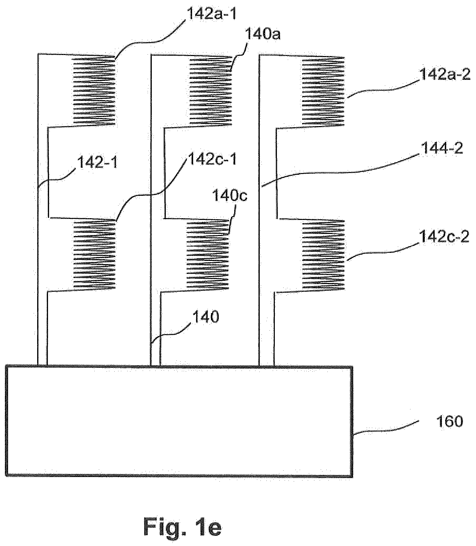

Die Messrohrpaare sind jeweils mit ihrer aktuellen Nutzmodeeigenfrequenz anzuregen, wobei hierzu die Erregeranordnungen 140a, 140c der beiden Messrohrpaare über eine Erregerleiterschleife 140 in Reihe geschaltet an die Betriebs- und Auswerteschaltung 160 angeschlossen sind, wie in Fig. 1e schematisch dargestellt ist, so dass die Erregeranordnungen mit einem überlagerten Signal der Nutzmodeeigenfrequenzen beider Messrohrpaare beaufschlagt werden können.

Die beiden einlaufseitigen Schwingungssensoren 142a-1 und 142c-1 sind über eine einlaufseitige Sensorleiterschleife 142-1 und die beiden einlaufseitigen Schwingungssensoren 142a-2 und 142c-2 über eine auslaufseitige Sensorleiterschleife 142-2 in Reihe geschaltet.

Die beiden Sensorleiterschleifen 142-1, 142-2 sind an die Betriebs- und Auswerteschaltung 160 angeschlossen, welche dazu eingerichtet ist, die Erregerleiterschleife 140 zu treiben und die Signale der beiden Sensorleiterschleifen 142-1, 142-2 zu erfassen und auszuwerten.

Aufgrund der hohen Güte der Messrohrpaare weisen die Resonanzschwingungen bei der jeweiligen Nutzmodeeigenfrequenz eine um ein Vielfaches größere Amplitude auf als die erzwungenen Schwingungen außer Resonanz bei der Nutzmodeeigenfrequenz des jeweils anderen Messrohrpaares. Dennoch können die erzwungenen Schwingungen außer Resonanz einen Nullpunktfehler bewirken, wenn die Sensorsignale aufgrund von Fertigungstoleranzen unterschiedliche Amplitudenverhältnisse aufweisen.

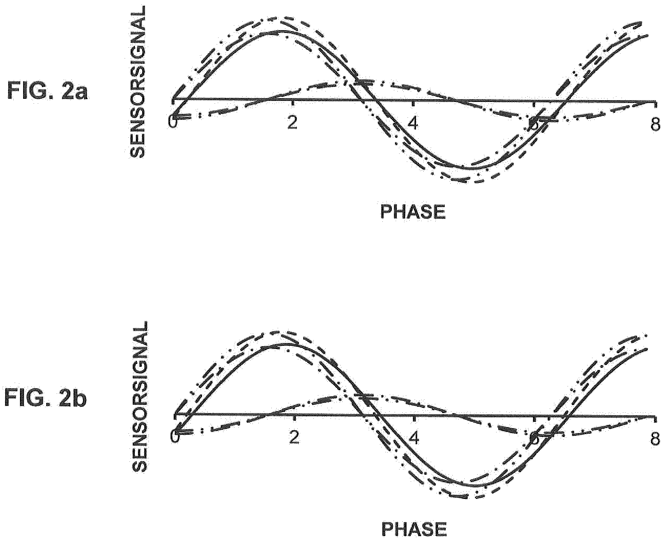

Die Resonanzschwingenen haben ihre maximale Amplitude bei einem Phasenwinkel von $\pi/2$ zwischen dem Erregersignal und der Auslenkung. Die erzwungenen Schwingungen außer Resonanz haben dagegen einen Phasenwinkel von 0 bzw. $\pi$ zwischen dem Erregersignal und der Auslenkung. Die überlagerte Schwingung eines Messrohrpaares bei der Nutzmodeeigenfrequenz des anderen Messrohrpaares weist also gegenüber dessen Resonanzschwingung eine Phasenverschiebug um $\pm \pi/2$ auf. Da die Signale Schwingungssensoren beider Messrohrpaare über gemeinsame Sensorleiterschleifen erfasst werden, sind bei der Nutzmodeeigenfrequenz eines Messrohrpaares die Signale der Schwingungssensoren dieses in Resonanz schwingenden Messrohrpaares sowie die Signale der Schwingungssensoren der erzwungenen Schwingungen des außer Resonanz schwingenden anderen Messrohrpaares überlagert, wobei letztere um $\pm \pi/2$ gegenüber ersteren verschobenen sind. Zur Erläuterung des Sachverhalts sind entsprechende Signalverläufe in Fign. 2a und 2b für einen Durchfluss von Null dargestellt, wobei zur Vereinfachung beide Messrohrpaare nur mit der Nutzmodeeigenfrequenz eines Messrohrpaares angeregt sind. Die einfach punktierten Linien zeigen jeweils den isolierten Signalverlauf der einlaufseitigen Schwingungssensoren. Die doppelt punktierten Linien zeigen jeweils einen isolierten Signalverlauf der auslaufseitigen Schwingungssensoren. Die Amplitude des außer Resonanz schwingenden Messrohrpaares ist hier zur Verdeutlichung stark vergrößert dargestellt. Die durchgezogenen Linien zeigen den überlagerten Signalverlauf der einlaufseitigen Schwingungssensoren, welcher tatsächlich über einlaufseitige Sensorleiterschleife erfasst wird. Die gestrichelten Linien zeigen den überlagerten Signalverlauf der auslaufseitigen Schwingungssensoren, welcher tatsächlich über auslaufseitige Sensorleiterschleife erfasst wird.

Fig. 2a zeigt unterschiedliche Signalamplituden für die einlaufseitigen und auslaufseitigen Schwingungssensoren, wobei das Verhältnis der Signalamplitude eines einlaufseitigen Sensors und der Signalamplitude des zugehörigen auslaufseitigen Sensors für beide Messrohrpaare gleich ist. In diesem Fall wirken sich nicht auf die Phasenbeziehung zwischen den überlagerten einlaufseitigen und auslaufseitigen Signalen aus. Diese haben bei einem Durchfluss von Null gleichzeitige Nulldurchgänge.

Wenn dagegen, wie in Fig. 2b dargestellt, das Verhältnis der Signalamplitude eines einlaufseitigen Sensors und der Signalamplitude des zugehörigen auslaufseitigen Sensors des einen Messrohrpaares von dem des anderen abweicht, führt dies zu einer Phasendifferenz zwischen den überlagerten auslaufseitigen und auslaufseitigen Signalen, die - dem Messprinzip entsprechend - einen Nullpunktfehler verursacht, wenn keine weiteren Maßnahmen ergriffen werden.

Erfindungsgemäß ist die Betriebs- und Auswerteschaltung dazu eingerichtet, beim Ermitteln von Massedurchflussmesswerte auf Basis von durchflussabhängigen Phasendifferenzen eine Nullpunktkorrektur für das erste Messrohrpaar und/oder das zweite Messrohrpaar unter Berücksichtigung des ersten und zweiten Signalamplitudenverhältnisses oder daraus abgeleiteter Größen durchzuführen.

Im hier beschriebenen Ausführungsbeispiel ist die Betriebs- und Auswerteschaltung dazu eingerichtet, zunächst die Signalamplituden bei den beiden Nutzmodeeigenfrequenzen in den Signalen der einlaufseitigen und der auslaufseitigen Sensorleiterschleife zu ermitteln. Die Signalamplituden sind praktisch vollständig den Schwingungssensoren des Messrohrpaares zuzurechnen dessen Nutzmodeeigenfrequenz betrachtet wird, da der störende Beitrag der Schwingungssensoren des jeweils anderen Messrohrpaares durch dessen erzwungene Schwingung nur mit geringer Amplitude und einer Phasenverschiebung von $\pm \pi/2$ überlagert ist, und sich somit kaum auf die Amplitude auswirkt.

Die Betriebs- und Auswerteschaltung, welche einen Mikroprozessor enthält, berechnet ein erstes Signalamplitudenverhältnis zwischen den Signalen der einlaufseitigen Signalschleife und der auslaufseitigen Signalschleife bei der Nutzmodeeigenfrequenz des ersten Messrohrpaares, und ein zweites Signalamplitudenverhältnis bei der zwischen den Signalen der einlaufseitigen Signalschleife und der auslaufseitigen Signalschleife bei der Nutzmodeeigenfrequenz des ersten Messrohrpaares.

Die Betriebs- und Auswerteschaltung berechnet in einer Ausgestaltung eine mittlere Amplitude $A'_1(f_1, f_2, I_2)$ des ersten Messrohrpaares bei der Nutzmodeeigenfrequenz des zweiten Messrohrpaares gemäß:

$$A'_1 = \frac{e_{D,1} \cdot I_2 \cdot k_{N,1}}{\left|1 - \left(\frac{f_2}{f_1}\right)^2\right|},$$

wobei $e_{D,1}$ eine Erregereffektivität für das erste Messrohrpaar $k_{N,1}$ eine Nachgiebigkeit des ersten Messrohrpaares für die Biegeschwingungsnutzmode und $I_2$ die Amplitude des Erregerstroms bei der Nutzmodeeigenfrequenz des zweiten Messrohrpaares sind.

Die Betriebs- und Auswerteschaltung berechnet in einer Ausgestaltung weiterhin eine mittlere Amplitude $A'_2(f_2, f_1, I_1)$ des zweiten Messrohrpaares gemäß:

$$A'_2 = \frac{e_{D,2} \cdot I_1 \cdot k_{N,2}}{\left|1 - \left(\frac{f_1}{f_2}\right)^2\right|},$$

wobei $e_{D,2}$ eine Erregereffektivität für das zweite Messrohrpaar, $k_{N,2}$ eine Nachgiebigkeit des zweiten Messrohrpaares für die Biegeschwingungsnutzmode und $I_1$ die Amplitude des Erregerstroms bei der Nutzmodeeigenfrequenz des ersten Messrohrpaares sind.

Die Betriebs- und Auswerteschaltung berechnet in einer Ausgestaltung weiterhin Schwingungsamplituden $A'_{in,1}$, $A'_{out,1}$, $A'_{in,2}$, $A'_{out,2}$, der Sensoren jeweils eines Messrohrpaares bei der Nutzmodeeigenfrequenz des anderen Messrohrpaares mittels der ermittelten mittleren Schwingungsamplitude $A'_1$, $A'_2$ bei der Nutzmodeeigenfrequenz des anderen Messrohrpaares und anhand der Signalamplituden $A_{in,1}$, $A_{out,1}$, $A_{in,2}$, $A_{out,2}$ bei der eigenen Nutzmodeeignfrequenz gemäß:

$$A'_{in,1} = A'_1(f_1, f_2, I_2) \cdot \frac{2 \cdot A_{in,1}}{A_{in,1} + A_{out,1}},$$

$$A'_{out,1} = A'_1(f_1, f_2, I_2) \cdot \frac{2 \cdot A_{out,1}}{A_{in,1} + A_{out,1}},$$

$$A'_{in,2} = A'_2(f_2, f_1, I_1) \cdot \frac{2 \cdot A_{in,2}}{A_{in,2} + A_{out,2}},$$

$$A'_{out,2} = A'_2(f_2, f_1, I_1) \cdot \frac{2 \cdot A_{out,2}}{A_{in,2} + A_{out,2}}.$$

Die Betriebs- und Auswerteschaltung berechnet in einer Ausgestaltung weiterhin einen Proportionalitätsfaktor $F_{1\text{-}2}$ des Nullpunktfehlerbeitrags des ersten Messrohrpaares zum Nullpunktfehler des zweiten Messrohrpaares gemäß:

$$F_{1-2} = \frac{A'_{in,1}}{A_{in,2}} - \frac{A'_{out,1}}{A_{out,2}}$$

bzw:

$$F_{1-2} = \frac{2\,A'_1}{A_{in,1} + A_{out,1}} \cdot \left(\frac{A_{in,1}}{A_{in,2}} - \frac{A_{out,1}}{A_{out,2}}\right).$$

Die Betriebs- und Auswerteschaltung berechnet in einer Ausgestaltung weiterhin einen Proportionalitätsfaktor $F_{2\text{-}1}$ des Nullpunktfehlerbeitrags des zweiten Messrohrpaares zum Nullpunktfehler des ersten Messrohrpaares gemäß:

$$F_{2-1} = \frac{A'_{in,2}}{A_{in,1}} - \frac{A'_{out,2}}{A_{out,1}}$$

bzw:

$$F_{2-1} = \frac{2\,A'_2}{A_{in,2} + A_{out,2}} \cdot \left( \frac{A_{in,2}}{A_{in,1}} - \frac{A_{out,2}}{A_{out,1}} \right).$$

Die Betriebs- und Auswerteschaltung berechnet in einer Ausgestaltung weiterhin eine dem Nullpunktfehlerbeitrag des ersten Messrohrpaares zum Nullpunktfehler des zweiten Messrohrpaares entsprechende Nullpunktverzögerungszeit $\tau_{1\text{-}2}$ gemäß:

$$\tau_{1-2} = \frac{F_{1-2}}{2\pi \cdot f_2},$$

Die Betriebs- und Auswerteschaltung berechnet in einer Ausgestaltung weiterhin eine dem Nullpunktfehlerbeitrag des zweiten Messrohrpaares zum Nullpunktfehler des ersten Messrohrpaares entsprechende Nullpunktverzögerungszeit $\tau_{2\text{-}1}$ gemäß:

$$\tau_{2-1} = \frac{F_{2-1}}{2\pi \cdot f_1}.$$

Die Betriebs- und Auswerteschaltung korrigiert in einer Ausgestaltung weiterhin die im Messbetrieb ermittelten durchflussabhängigen Verzögerungszeiten zwischen den Sensorsignalen bei den Nutzmodeeigenfrequenzen des ersten und zweiten Messrohrpaares $\tau_{m1}$, $\tau_{m2}$ um die Nullpunktverzögerungszeiten $\tau_{1\text{-}2}$, $\tau_{2\text{-}1}$, um auf der Basis der korrigierten Verzögerungszeiten $\tau_{korr1}$, $\tau_{korr2}$ den Massendurchfluss durch das jeweilige Messrohrpaar zu berechnen, wobei $\tau_{korr1}$ = $\tau_{m1}$ - $\tau_{m2\text{-}1}$ und $\tau_{korr2}$ = $\tau_{m2}$ - $\tau_{m1\text{-}2}$.

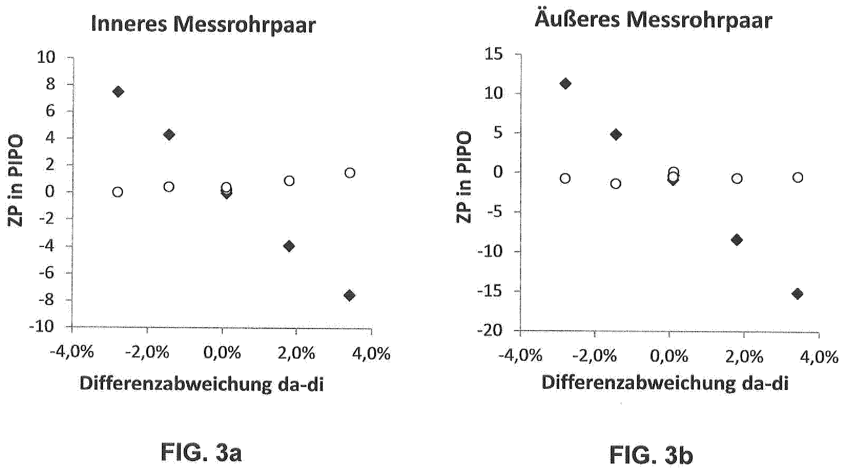

Figuren 3a und 3b zeigen jeweils einen Messwert bei einem Durchfluss von Null in $10^{-5}$ Teilen des Messbereichs für das innere bzw. äußere Messrohrpaar in Abhängigkeit von abweichenden Signalamplitudenverhältnissen mit und ohne Anwendung der erfindungsgemäßen Korrektur. Im Ergebnis ist der erfindungsgemäße Durchflussmesser geeignet den Nullpunktfehler zuverlässig zu korrigieren.

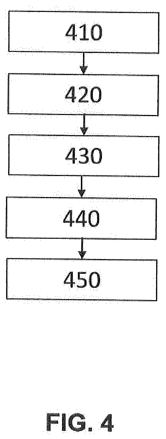

Das erfindungsgemäße Verfahren, umfasst im Ergebnis die in Fig. 4 dargestellten Schritte:

Treiben der beiden elektrodynamischen Erreger mit einem gemeinsamen Erregersignal, wobei das Erregersignal zum Anregen der Biegeschwingungsnutzmoden beider Messrohrpaare dient (410);

Erfassen von überlagerten Sensorsignalen, der beiden einlaufseitigen Schwingungssensoren (420);

Erfassen von überlagerten Signalen, der beiden auslaufseitigen Schwingungssensoren (430);

Ermitteln von durchflussabhängigen Phasendifferenzen zwischen den Signalen der einlaufseitigen und auslaufseitigen Schwingungssensoren der Schwingungssensorpaare (440) zum Ermitteln von Massedurchflussmesswerten auf Basis dieser durchflussabhängigen Phasendifferenzen;

wobei die Sensorsignale bei Schwingungen mit der der ersten Nutzmodeeigenfrequenz f1 ein erstes Signalamplitudenverhältnis zwischen den Signalen der einlaufseitigen Sensoren und den Signalen der auslaufseitigen Sensoren aufweisen,

wobei die Sensorsignale bei Schwingungen mit der der zweiten Nutzmodeeigenfrequenz f2 ein zweites Signalamplitudenverhältnis zwischen den Signalen der einlaufseitigen Sensoren und den Signalen der auslaufseitigen Sensoren aufweisen,

Durchführen einer Nullpunktkorrektur (450) für ein erstes der Messrohrpaare und/oder ein zweites der Messrohrpaare unter Berücksichtigung des ersten und zweiten Signalamplitudenverhältnisses beim Ermitteln der Massedurchflussmesswerte auf Basis von durchflussabhängigen Phasendifferenzen.

**Patentansprüche**

1. Massedurchflussmessgerät (100) nach dem Coriolis-Prinzip, zum Bestimmen eines Massedurchflussmesswerts eines das Massedurchflussmessgerät durchströmenden Mediums, umfassend:

   ein erstes Messrohrpaar (110a, 110b) mit zwei gegeneinander schwingfähig gelagerten Messrohren mit einer Biegeschwingungsnutzmode, die eine erste medienabhängige Nutzmodeeigenfrequenz f1 aufweist;
   einen ersten elektrodynamischen Erreger (140a) zum Anregen von Biegeschwingungen zwischen den Messrohren des ersten Messrohrpaares,
   ein erstes Schwingungssensorpaar (142a-1, 142a-2) mit einem ersten einlaufseitigen Schwingungssensor und einem ersten auslaufseitigen Schwingungssensor zum Erfassen von Biegeschwingungen an zwei Positionen des ersten Messrohrpaares;
   ein zweites Messrohrpaar (110a, 110b) mit zwei gegeneinander schwingfähig gelagerten Messrohren mit einer Biegeschwingungsnutzmode, die eine zweite medienabhängige Nutzmodeeigenfrequenz f2 aufweist,
   einen zweiten elektrodynamischen Erreger (140c) zum Anregen von Biegeschwingungen zwischen den Messrohren des zweiten Messrohrpaares;
   ein zweites Schwingungssensorpaar (142a-1, 142a-2) mit einem zweiten einlaufseitigen Schwingungssensor und einem zweiten auslaufseitigen Schwingungssensor zum Erfassen von Biegeschwingungen an zwei Positionen des zweiten Messrohrpaares;
   eine Betriebs- und Auswerteschaltung (160); zum Treiben des ersten und zweiten elektrodynamischen Erregers mit einem gemeinsamen Erregersignal und zum Erfassen von Signalen der Schwingungssensoren; zum Ermitteln von durchflussabhängigen Phasendifferenzen zwischen den Signalen der einlaufseitigen und auslaufseitigen Schwingungssensoren eines der Schwingungssensorpaare und zum Ermitteln von Massedurchflussmesswerten auf Basis dieser durchflussabhängigen Phasendifferenzen;
   wobei das Erregersignal zum Anregen der Biegeschwingungsnutzmoden beider Messrohrpaare dient;
   wobei ein Erregersignalpfad dazu eingerichtet ist, das Erregersignal zum ersten und zweiten elektrodynamischen Erreger zu übertragen;
   wobei ein einlaufseitiger Sensorsignalpfad dazu eingerichtet ist, Signale des ersten und des zweiten einlaufseitigen Schwingungssensors überlagert zu übertragen;
   wobei ein auslaufseitiger Sensorsignalpfad dazu eingerichtet ist, Signale des ersten und des zweiten auslaufseitigen Schwingungssensors überlagert zu übertragen;
   wobei die Sensorsignale bei Schwingungen mit der ersten Nutzmodeeigenfrequenz f1 ein erstes Signalamplitudenverhältnis zwischen den Signalen der einlaufseitigen Sensoren und den Signalen der auslaufseitigen Sensoren aufweisen,
   wobei die Sensorsignale bei Schwingungen mit der zweiten Nutzmodeeigenfrequenz f2 ein zweites Signalamplitudenverhältnis zwischen den Signalen der einlaufseitigen Sensoren und den Signalen der auslaufseitigen Sensoren aufweisen,
   wobei die Betriebs- und Auswerteschaltung dazu eingerichtet ist, beim Ermitteln der Massedurchflussmesswerte auf Basis von durchflussabhängigen Phasendifferenzen eine Nullpunktkorrektur für das erste Messrohrpaar und/oder das zweite Messrohrpaar unter Berücksichtigung des ersten und zweiten Signalamplitudenverhältnisses durchzuführen,
   wobei die Betriebs- und Auswerteschaltung dazu eingerichtet ist, die Nullpunktkorrektur für das erste Messrohrpaar und/oder das zweite Messrohrpaar in Abhängigkeit von einer Abweichung der Signalamplitudenverhältnisse zueinander durchzuführen.

2. Massedurchflussmessgerät nach Anspruch 1

   wobei die Nullpunktkorrektur für das erste Messrohrpaar einen Term aufweist, der abhängt von den aktuellen Schwingungsamplituden der Schwingungssensoren des zweiten Messrohrpaares bei der ersten Nutzmodeeigenfrequenz f1 im Verhältnis zu den aktuellen Schwingungsamplituden der Schwingungssensoren des ersten Messrohrpaares bei der ersten Nutzmodeeigenfreqenz, und/oder
   wobei die Nullpunktkorrektur für das zweite Messrohrpaar einen Term aufweist, der abhängt von den aktuellen Schwingungsamplituden der Schwingungssensoren des ersten Messrohrpaares bei der zweiten Nutzmodeeigenfreqenz im Verhältnis zu den aktuellen Schwingungsamplituden der Schwingungssensoren des zweiten Messrohrpaares bei der zweiten Nutzmodeeigenfrequenz.

3. Massedurchflussmessgerät nach einem der vorhergehenden Ansprüche, wobei die Betriebs- und Auswerteschaltung dazu eingerichtet ist, zur Ermittlung der Schwingungsamplituden der Schwingungssensoren des ersten Messrohrpaares eine mittlere Sensoramplitudenfunktion $A_1^{'}(f_1, f_2, I_2)$ bei der Nutzmodeeigenfrequenz des zweiten Messrohrpaares abzuschätzen, wobei $f_1$, $f_2$ die Resonanzfrequenzen der Biegeschwingungsnutzmoden des ersten und zweiten Messrohrpaares sind, wobei $I_2$ ein Erregerstromsignal mit der Nutzmodeeigenfrequenz des zweiten Messrohrpaars $f_2$ ist, wobei die Amplituden des einlaufseitigen und auslaufseitigen Schwingungssensors als proportional zur mittleren Sensoramplitudenfunktion ermittelt werden,
und/oder
wobei die Betriebs- und Auswerteschaltung dazu eingerichtet ist, zur Ermittlung der Schwingungsamplituden der Schwingungssensoren des zweiten Messrohrpaares eine mittlere Sensoramplitudenfunktion $A_2^{'}(f_2, f_1, I_1)$ bei der Nutzmodeeigenfrequenz des ersten Messrohrpaares abzuschätzen, wobei $f_2$, $f_1$ die Resonanzfrequenzen der Biegeschwingungsnutzmoden des zweiten und ersten Messrohrpaares sind, wobei $I_1$ ein Erregerstromsignal mit der Nutzmodeeigenfrequenz des ersten Messrohrpaars $f_1$ ist, wobei die Amplituden des einlaufseitigen und auslaufseitigen Schwingungssensors als proportional zur mittleren Sensoramplitudenfunktion ermittelt werden.

4. Massedurchflussmessgerät nach Anspruch 3, wobei die Betriebs- und Auswerteschaltung dazu eingerichtet ist, eine Schwingungsamplitude $A'_{in,1}$ eines einlaufseitigen Sensors eines ersten Messrohrpaares bei der Resonanzfrequenz des zweiten Messrohrpaares abzuschätzen gemäß:

$$A_{in,1}^{'} = A_1^{'}(f_1, f_2, I_2) \cdot \frac{2 \cdot A_{in,1}}{A_{in,1} + A_{out,1}},$$

und eine Schwingungsamplitude $A'_{out,1}$ eines auslaufseitigen Sensors eines ersten Messrohrpaares bei der Resonanzfrequenz des zweiten Messrohrpaares abzuschätzen gemäß:

$$A_{out,1}^{'} = A_1^{'}(f_1, f_2, I_2) \cdot \frac{2 \cdot A_{out,1}}{A_{in,1} + A_{out,1}},$$

wobei $A'_1(f_1, f_2, I_2)$ die frequenzabhängige und erregerstromabhängige, mittlere Sensoramplitudenfunktion für das erste Messrohrpaar ist, und wobei $A_{in,1}$ und $A_{out,1}$ die Sensorsignalamplituden der einlaufseitigen bzw. auslaufseitigen Sensoren bei der ersten Resonanzfrequenz sind,
und/oder
wobei die Betriebs- und Auswerteschaltung dazu eingerichtet ist, eine Schwingungsamplitude $A'_{in,2}$ eines einlaufseitigen Sensors eines zweiten Messrohrpaares bei der Resonanzfrequenz des ersten Messrohrpaares abzuschätzen gemäß:

$$A_{in,2}^{'} = A_2^{'}(f_2, f_1, I_1) \cdot \frac{2 \cdot A_{in,2}}{A_{in,2} + A_{out,2}},$$

und eine Schwingungsamplitude $A'_{out,2}$ eines auslaufseitigen Sensors eines zweiten Messrohrpaares bei der Resonanzfrequenz des ersten Messrohrpaares abzuschätzen gemäß:

$$A_{out,2}^{'} = A_2^{'}(f_2, f_1, I_1) \cdot \frac{2 \cdot A_{out,2}}{A_{in,2} + A_{out,2}},$$

$A'_2(f_2, f_1, I_1)$ die frequenzabhängige und erregerstromabhängige, mittlere Sensoramplitudenfunktion für das zweite Messrohrpaar ist, und wobei $A_{in,2}$ und $A_{out,2}$ die Sensorsignalamplituden der einlaufseitigen bzw. auslaufseitigen Sensoren bei der Resonanzfrequenz des zweiten Messrohrpaars sind.

5. Massedurchflussmessgerät nach einem der vorhergehenden Ansprüche, wobei die Betriebs- und Auswerteschaltung dazu eingerichtet ist:

eine Signalamplitude der einlaufseitigen Sensoren bei der ersten Nutzmodeeigenfrequenz f1 normiert mit einer Empfindlichkeitskonstanten und der ersten Nutzmodeeigenfrequenz f1 als Maß für die Schwingungsamplitude $A_{in1}$ des ersten einlaufseitigen Sensors zu verwenden, und eine Signalamplitude der auslaufseitigen Sensoren bei der ersten Nutzmodeeigenfrequenz f1 normiert mit einer Empfindlichkeitskonstanten und der ersten Nutzmodeeigenfrequenz f1 als Maß für die Schwingungsamplitude $A_{out1}$ des ersten auslaufseitigen Sensors zu verwenden; und/oder

eine Signalamplitude der einlaufseitigen Sensoren bei der zweiten Nutzmodeeigenfrequenz f2 normiert mit einer Empfindlichkeitskonstanten und der Nutzmodeeigenfrequenz f2 als Maß für die Schwingungsamplitude $A_{in2}$ des zweiten einlaufseitigen Sensors zu verwenden, und eine Signalamplitude der auslaufseitigen Sensoren bei der zweiten Nutzmodeeigenfrequenz f2 normiert mit einer Empfindlichkeitskonstanten und der zweiten Nutzmodeeigenfrequenz f2 als Maß für die Schwingungsamplitude $A_{out2}$ des zweiten auslaufseitigen Sensors zu verwenden;

6. Massedurchflussmessgerät nach einem der Ansprüche 3 bis 5, wobei die mittlere Sensoramplitudenfunktion $A'_1(f_1, f_2, I_2)$ für das erste Messrohrpaar gegeben ist als:

$$A'_1 = \frac{e_{D,1} \cdot I_2 \cdot k_{N,1}}{\left|1 - \left(\frac{f_2}{f_1}\right)^2\right|},$$

wobei $e_{D,1}$ eine Erregereffektivität für das erste Messrohrpaar und $k_{N,1}$ eine Nachgiebigkeit des ersten Messrohrpaares für die Biegeschwingungsnutzmode ist,
und/oder
wobei die mittlere Sensoramplitudenfunktion $A'_2(f_2, f_1, I_1)$ für das zweite Messrohrpaar gegeben ist als:

$$A'_2 = \frac{e_{D,2} \cdot I_1 \cdot k_{N,2}}{\left|1 - \left(\frac{f_1}{f_2}\right)^2\right|},$$

wobei $e_{D,2}$ eine Erregereffektivität für das zweite Messrohrpaar und $k_{N,2}$ eine Nachgiebigkeit des zweiten Messrohrpaares für die Biegeschwingungsnutzmode ist.

7. Massedurchflussmessgerät nach Ansprüchen 3 bis 5, wobei die mittlere Sensoramplitudenfunktion $A'_1(f_1, f_2, I_2)$ für das erste Messrohrpaar weiterhin von der Güte $Q_1$ des ersten Messrohrpaares abhängt und gegeben ist als:

$$A'_1(f_1, f_2, I_2, Q_1) = \frac{e_{D,1} \cdot I_2 \cdot k_{N,1}}{\left[\left(1 - \left(\frac{f_2}{f_1}\right)^2\right)^2 + \left(\frac{\left(\frac{f_2}{f_1}\right)}{Q_1}\right)^2\right]^{1/2}},$$

wobei $e_{D,1}$ eine Erregereffektivität für das erste Messrohrpaar und $k_{N,1}$ eine Nachgiebigkeit des ersten Messrohrpaares für die Biegeschwingungsnutzmode ist,
und wobei die Güte $Q_1$ des ersten Messrohrpaares bestimmbar ist als:

$$Q_1 = \frac{A_{in1} + A_{out1}}{2 \cdot e_{D,1} \cdot I_1 \cdot k_{N,1}}$$

und/oder
wobei die mittlere Sensoramplitudenfunktion $A'_2(f_2, f_1, I_1)$ für das zweite Messrohrpaar weiterhin von der Güte $Q_2$ des zweiten Messrohrpaares abhängt und gegeben ist als:

$$A'_2(f_2, f_1, I_1, Q_2) = \frac{e_{D,2} \cdot I_1 \cdot k_{N,2}}{\left[\left(1 - \left(\frac{f_1}{f_2}\right)^2\right)^2 + \left(\frac{\left(\frac{f_1}{f_2}\right)}{Q_2}\right)^2\right]^{1/2}},$$

wobei $e_{D,2}$ eine Erregereffektivität für das zweite Messrohrpaar und $k_{N,2}$ eine Nachgiebigkeit des zweiten Messrohrpaares für die Biegeschwingungsnutzmode ist, und wobei die Güte $Q_2$ des zweiten Messrohrpaares bestimmbar ist als:

$$Q_2 = \frac{A_{in2} + A_{out2}}{2 \cdot e_{D,2} \cdot I_2 \cdot k_{N,2}}$$

**8.** Massedurchflussmessgerät nach Anspruch 3 oder einem von Anspruch 3 abhängigen Anspruch, wobei die Betriebs- und Auswerteschaltung dazu eingerichtet ist, einen Proportionalitätsfaktor $F_{1-2}$ des Nullpunktfehlerbeitrags des ersten Messrohrpaares zum Nullpunktfehler des zweiten Messrohrpaares zu ermitteln gemäß:

$$F_{1-2} = \frac{A'_{in,1}}{A_{in,2}} - \frac{A'_{out,1}}{A_{out,2}}$$

bzw:

$$F_{1-2} = \frac{2\,A'_1}{A_{in,1} + A_{out,1}} \cdot \left( \frac{A_{in,1}}{A_{in,2}} - \frac{A_{out,1}}{A_{out,2}} \right).$$

und/oder

wobei die Betriebs- und Auswerteschaltung dazu eingerichtet ist, einen Proportionalitätsfaktor $F_{2-1}$ des Nullpunktfehlerbeitrags des zweiten Messrohrpaares zum Nullpunktfehler des ersten Messrohrpaares zu ermitteln gemäß:

$$F_{2-1} = \frac{A'_{in,2}}{A_{in,1}} - \frac{A'_{out,2}}{A_{out,1}}$$

bzw:

$$F_{2-1} = \frac{2\,A'_2}{A_{in,2} + A_{out,2}} \cdot \left( \frac{A_{in,2}}{A_{in,1}} - \frac{A_{out,2}}{A_{out,1}} \right).$$

**9.** Massedurchflussmessgerät nach Anspruch 8, wobei die Betriebs- und Auswerteschaltung dazu eingerichtet ist, eine dem Nullpunktfehlerbeitrag des ersten Messrohrpaares zum Nullpunktfehler des zweiten Messrohrpaares entsprechende Nullpunktverzögerungszeit $\tau_{1\text{-}2}$ zu berechnen gemäß:

$$\tau_{1-2} = \frac{F_{1-2}}{2\pi \cdot f_2},$$

wobei die Betriebs- und Auswerteschaltung dazu eingerichtet ist, eine dem Nullpunktfehlerbeitrag des zweiten Messrohrpaares zum Nullpunktfehler des ersten Messrohrpaares entsprechende Nullpunktverzögerungszeit $\tau_{2\text{-}1}$ zu berechnen gemäß:

$$\tau_{2-1} = \frac{F_{2-1}}{2\pi \cdot f_1},$$

und

wobei die Betriebs- und Auswerteschaltung dazu eingerichtet ist, im Messbetrieb ermittelte durchflussabhängigen Verzögerungszeiten zwischen den Sensorsignalen bei den Nutzmodeeigenfrequenzen des ersten und zweiten Messrohrpaares $\tau_{m1}$, $\tau_{m2}$ um die Nullpunktverzögerungszeiten $\tau_{1\text{-}2}$, $\tau_{2\text{-}1}$ zu korrigieren, um auf der Basis der korrigierten Verzögerungszeiten $\tau_{korr1}$, $\tau_{korr2}$ den Massendurchfluss durch das jeweilige Messrohrpaar zu berechnen, wobei $\tau_{korr1} = \tau_{m1} - \tau_{m2\text{-}1}$ und $\tau_{korr2} = \tau_{m2} - \tau_{m1\text{-}2}$.

**10.** Verfahren zum Bestimmen eines Massedurchflussmesswerts mittels eines nach dem Coriolis-Prinzip arbeitenden Massedurchflussmessgeräts, insbesondere nach einem der vorhergehenden Ansprüche, wobei das Messgerät zwei Messrohrpaare mit jeweils zwei gegeneinander schwingfähig gelagerten Messrohren mit einer Biegeschwingungsnutzmode aufweist, wobei die Biegeschwingungsnutzmoden der beiden Messrohrpaare voneinander abweichende Nutzmodeeigenfrequenzen (f1, f2), aufweisen, wobei die beiden Messrohrpaare jeweils einen elektrodynamischen Erreger zum Anregen von Biegeschwingungen zwischen den Messrohren eines Messrohrpaares aufweisen, wobei die beiden Erreger über eine Erregerleiterschleife in Reihe geschaltet sind, wobei die Messrohrpaare jeweils ein Schwingungssensorpaar mit einem einlaufseitigen Schwingungssensor und einem auslaufseitigen Schwingungssensor zum Erfassen von Biegeschwingungen an zwei Positionen eines Messrohrpaares aufweisen; wobei ein einlaufseitiger Sensorsignalpfad dazu eingerichtet ist, Signale der einlaufseitigen Schwingungssensoren überlagert zu übertragen, wobei ein auslaufseitiger Sensorsignalpfad dazu eingerichtet ist, Signale der auslaufseitigen Schwingungssensoren überlagert zu übertragen, wobei das Verfahren die folgenden Schritte aufweist:

Treiben der beiden elektrodynamischen Erreger mit einem gemeinsamen Erregersignal, wobei das Erregersignal zum Anregen der Biegeschwingungsnutzmoden beider Messrohrpaare dient (410);
Erfassen von überlagerten Sensorsignalen, der beiden einlaufseitigen Schwingungssensoren (420);
Erfassen von überlagerten Signalen, der beiden auslaufseitigen Schwingungssensoren (430);
Ermitteln von durchflussabhängigen Phasendifferenzen zwischen den Signalen der einlaufseitigen und auslaufseitigen Schwingungssensoren der Schwingungssensorpaare (440) zum Ermitteln von Massedurchflussmesswerten auf Basis dieser durchflussabhängigen Phasendifferenzen;
wobei die Sensorsignale bei Schwingungen mit der ersten Nutzmodeeigenfrequenz f1 ein erstes Signalamplitudenverhältnis zwischen den Signalen der einlaufseitigen Sensoren und den Signalen der auslaufseitigen Sensoren aufweisen,
wobei die Sensorsignale bei Schwingungen mit der zweiten Nutzmodeeigenfrequenz f2 ein zweites Signalamplitudenverhältnis zwischen den Signalen der einlaufseitigen Sensoren und den Signalen der auslaufseitigen Sensoren aufweisen,
Durchführen einer Nullpunktkorrektur (450) für ein erstes der Messrohrpaare und/oder ein zweites der Messrohrpaare unter Berücksichtigung des ersten und zweiten Signalamplitudenverhältnisses beim Ermitteln der Massedurchflussmesswerte auf Basis von durchflussabhängigen Phasendifferenzen,
wobei die Nullpunktkorrektur für das erste Messrohrpaar und/oder das zweite Messrohrpaar in Abhängigkeit von einer Abweichung der Signalamplitudenverhältnisse zueinander erfolgt.

11. Verfahren nach Anspruch 10,

wobei die Nullpunktkorrektur für das erste Messrohrpaar einen Term aufweist, der abhängt von den aktuellen Schwingungsamplituden der Schwingungssensoren des zweiten Messrohrpaares bei der ersten Nutzmodeeigenfrequenz f1 im Verhältnis zu den aktuellen Schwingungsamplituden der Schwingungssensoren des ersten Messrohrpaares bei der ersten Nutzmodeeigenfreqenz, und/oder
wobei die Nullpunktkorrektur für das zweite Messrohrpaar einen Term aufweist, der abhängt von den aktuellen Schwingungsamplituden der Schwingungssensoren des ersten Messrohrpaares bei der zweiten Nutzmodeeigenfreqenz im Verhältnis zu den aktuellen Schwingungsamplituden der Schwingungssensoren des zweiten Messrohrpaares bei der zweiten Nutzmodeeigenfreqenz.

12. Verfahren nach einem der Ansprüche 10 oder 11, wobei zur Ermittlung der Schwingungsamplituden der Schwingungssensoren des ersten Messrohrpaares eine mittlere Sensoramplitudenfunktion $A_1'(f_1, f_2, I_2)$ bei der Nutzmodeeigenfrequenz des zweiten Messrohrpaares abgeschätzt wird, wobei $f_1$, $f_2$ die Resonanzfrequenzen der Biegeschwingungsnutzmoden des ersten und zweiten Messrohrpaares sind, wobei $I_2$ ein Erregerstromsignal mit der Nutzmodeeigenfrequenz des zweiten Messrohrpaars $f_2$ ist, wobei die Amplituden des einlaufseitigen und auslaufseitigen Schwingungssensors als proportional zur mittleren Sensoramplitudenfunktion ermittelt werden,
und/oder
wobei zur Ermittlung der Schwingungsamplituden der Schwingungssensoren des zweiten Messrohrpaares eine mittlere Sensoramplitudenfunktion $A_2'(f_2, f_1, I_1)$ bei der Nutzmodeeigenfrequenz des ersten Messrohrpaares abgeschätzt wird, wobei $f_2$, $f_1$ die Resonanzfrequenzen der Biegeschwingungsnutzmoden des zweiten und ersten Messrohrpaares sind, wobei $I_1$ ein Erregerstromsignal mit der Nutzmodeeigenfrequenz des ersten Messrohrpaars $f_1$ ist, wobei die Amplituden des einlaufseitigen und auslaufseitigen Schwingungssensors als proportional zur mittleren Sensoramplitudenfunktion ermittelt werden.

13. Verfahren nach einem der Ansprüche 10 bis 12, wobei eine Schwingungsamplitude $A_{in,1}'$ eines einlaufseitigen Sensors eines ersten Messrohrpaares bei der Resonanzfrequenz des zweiten Messrohrpaares abgeschätzt wird gemäß:

$$A'_{in,1} = A'_1(f_1, f_2, I_2) \cdot \frac{2 \cdot A_{in,1}}{A_{in,1} + A_{out,1}},$$

und eine Schwingungsamplitude $A'_{out,1}$ eines auslaufseitigen Sensors eines ersten Messrohrpaares bei der Resonanzfrequenz des zweiten Messrohrpaares abgeschätzt wird gemäß:

$$A'_{out,1} = A'_1(f_1, f_2, I_2) \cdot \frac{2 \cdot A_{out,1}}{A_{in,1} + A_{out,1}},$$

wobei $A'_1(f_1, f_2, I_2)$ die frequenzabhängige und erregerstromabhängige, mittlere Sensoramplitudenfunktion für das erste Messrohrpaar ist, und wobei $A_{in,1}$ und $A_{out,1}$ die Sensorsignalamplituden der einlaufseitigen bzw. auslaufseitigen Sensoren bei der ersten Resonanzfrequenz sind,
und/oder
wobei eine Schwingungsamplitude $A'_{in,2}$ eines einlaufseitigen Sensors eines zweiten Messrohrpaares bei der Resonanzfrequenz des ersten Messrohrpaares abgeschätzt wird gemäß:

$$A'_{in,2} = A'_2(f_2, f_1, I_1) \cdot \frac{2 \cdot A_{in,2}}{A_{in,2} + A_{out,2}},$$

und eine Schwingungsamplitude $A'_{out,2}$ eines auslaufseitigen Sensors eines zweiten Messrohrpaares bei der Resonanzfrequenz des ersten Messrohrpaares abgeschätzt wird gemäß:

$$A'_{out,2} = A'_2(f_2, f_1, I_1) \cdot \frac{2 \cdot A_{out,2}}{A_{in,2} + A_{out,2}},$$

$A'_2(f_2, f_1, I_1)$ die frequenzabhängige und erregerstromabhängige, mittlere Sensoramplitudenfunktion für das zweite Messrohrpaar ist, und wobei $A_{in,2}$ und $A_{out,2}$ die Sensorsignalam plituden der einlaufseitigen bzw. auslaufseitigen Sensoren bei der Resonanzfrequenz des zweiten Messrohrpaars sind.

14. Verfahren nach Anspruch 16 oder einem von Anspruch 17 abhängigen Anspruch, wobei ein Proportionalitätsfaktor $F_{1-2}$ des Nullpunktfehlerbeitrags des ersten Messrohrpaares zum Nullpunktfehler des zweiten Messrohrpaares ermittelt wird gemäß:

$$F_{1-2} = \frac{A'_{in,1}}{A_{in,2}} - \frac{A'_{out,1}}{A_{out,2}}$$

bzw:

$$F_{1-2} = \frac{2\,A'_1}{A_{in,1} + A_{out,1}} \cdot \left(\frac{A_{in,1}}{A_{in,2}} - \frac{A_{out,1}}{A_{out,2}}\right).$$

und/oder
wobei ein Proportionalitätsfaktor $F_{2-1}$ des Nullpunktfehlerbeitrags des zweiten Messrohrpaares zum Nullpunktfehler des ersten Messrohrpaares ermittelt wird gemäß:

$$F_{2-1} = \frac{A'_{in,2}}{A_{in,1}} - \frac{A'_{out,2}}{A_{out,1}}$$

bzw:

$$F_{2-1} = \frac{2\,A'_2}{A_{in,2} + A_{out,2}} \cdot \left(\frac{A_{in,2}}{A_{in,1}} - \frac{A_{out,2}}{A_{out,1}}\right).$$

15. Verfahren nach Anspruch 14, wobei eine dem Nullpunktfehlerbeitrag des ersten Messrohrpaares zum Nullpunktfehler des zweiten Messrohrpaares entsprechende Nullpunktverzögerungszeit $\tau_{1\text{-}2}$ berechnet wird gemäß:

$$\tau_{1-2} = \frac{F_{1-2}}{2\pi \cdot f_2},$$

wobei eine dem Nullpunktfehlerbeitrag des zweiten Messrohrpaares zum Nullpunktfehler des ersten Messrohrpaares entsprechende Nullpunktverzögerungszeit $\tau_{2\text{-}1}$ berechnet wird gemäß:

$$\tau_{2-1} = \frac{F_{2-1}}{2\pi \cdot f_1},$$

und

wobei im Messbetrieb ermittelte durchflussabhängigen Verzögerungszeiten zwischen den Sensorsignalen bei den Nutzmodeeigenfrequenzen des ersten und zweiten Messrohrpaares $\tau_{m1}$, $\tau_{m2}$ um die Nullpunktverzögerungszeiten $\tau_{1\text{-}2}$, $\tau_{2\text{-}1}$ korrigiert werden um auf der Basis der korrigierten Verzögerungszeiten $\tau_{korr1}$, $\tau_{korr2}$ den Massendurchfluss durch das jeweilige Messrohrpaar zu berechnen, wobei $\tau_{korr1} = \tau_{m1} - \tau_{m2\text{-}1}$ und $\tau_{korr2} = \tau_{m2} - \tau_{m1\text{-}2}$.

## Claims

1. Mass flowmeter (100) according to the Coriolis principle and designed to determine a mass flow measured value of a medium flowing through the mass flowmeter, wherein said flowmeter comprises:

   a first measuring tube pair (110a, 110b) with two measuring tubes mounted in a way that they can vibrate in relation to one another with a flexural vibration useful mode which has a first medium-dependent useful mode natural frequency $f_1$;
   a first electrodynamic exciter (140a) designed to excite flexural vibrations between the measuring tubes of the first measuring tube pair;
   a first vibration sensor pair (142a-1, 142a-2) comprising a first vibration sensor on the inlet side and a first vibration sensor on the outlet side, wherein said sensors are designed to measure flexural vibrations at two positions of the first measuring tube pair;
   a second measuring tube pair (110a, 110b) with two measuring tubes mounted in a way that they can vibrate in relation to one another with a flexural vibration useful mode that has a second medium-dependent useful mode natural frequency $f_2$,
   a second electrodynamic exciter (140c) designed to generate flexural vibrations between the measuring tubes of the second measuring tube pair;
   a second vibration sensor pair (142a-1, 142a-2) comprising a second vibration sensor on the inlet side and a second vibration sensor on the outlet side, wherein said sensors are designed to measure flexural vibrations at two positions of the second measuring tube pair;
   an operating and evaluation circuit (160) designed to

      - activate the first and the second electrodynamic exciter with a common exciter signal, wherein the circuit is designed to measure the signals of the vibration sensors
      - determine flow-dependent phase differences between the signals of the inlet-side and outlet-side vibration sensors of one of the pair of vibration sensors and to determine mass flow measured values on the basis of these flow-dependent phase differences;

   wherein the exciter signal is used to excite the flexural vibration useful modes of the two measuring tube pairs;
   wherein an exciter signal path is designed to transmit the exciter signal to the first and to the second electrodynamic exciter;
   wherein a sensor signal path on the inlet side is designed to transmit signals of the first and second vibration sensor on the inlet side in a superimposed manner;
   wherein a sensor signal path on the outlet side is designed to transmit signals of the first and of the second vibration sensor on the outlet side in a superimposed manner;
   wherein, in the event of vibrations at the first useful mode natural frequency $f_1$, the sensor signals have a first signal amplitude ratio between the signals of the sensors on the inlet side and the signals of the sensors on the outlet side,

wherein, in the event of vibrations at the second useful mode natural frequency $f_2$, the sensor signals have a second signal amplitude ratio between the signals of the sensors on the inlet side and the signals of the sensors on the outlet side,

wherein the operating and evaluation circuit is designed to perform a zero point correction for the first measuring tube pair and/or the second measuring tube pair when determining the mass flow measured values on the basis of flow-dependent phase differences, taking into account the first and the second signal amplitude ratio,

wherein the operating and evaluation circuit is designed to perform the zero point correction for the first measuring tube pair and/or the second measuring tube pair depending on a deviation of the signal amplitude ratios in relation to one another.

2. Mass flowmeter as claimed in Claim 1,

wherein the zero point correction for the first measuring tube pair has a term that depends on the current vibration amplitudes of the vibration sensors of the second measuring tube pair at the first useful mode natural frequency $f_1$ in relation to the current vibration amplitudes of the vibration sensors of the first measuring tube pair at the first useful mode natural frequency, and/or

wherein the zero point correction for the second measuring tube pair has a term that depends on the current vibration amplitudes of the vibration sensors of the first measuring tube pair at the second useful mode natural frequency in relation to the current vibration amplitudes of the vibration sensors of the second measuring tube pair at the second useful mode natural frequency.

3. Mass flowmeter as claimed in one of the previous claims, wherein the operating and evaluation circuit is designed to estimate an average sensor amplitude function $A'_1(f_1, f_2, I_2)$ at the useful mode natural frequency of the second measuring tube pair for the purpose of determining the vibration amplitudes of the vibration sensors of the first measuring tube pair, wherein $f_1$, $f_2$ are the resonance frequencies of the flexural vibration useful modes of the first and second measuring tube pair, wherein $I_2$ is a exciter current signal with the useful mode natural frequency of the second measuring tube pair $f_2$, wherein the amplitudes of the vibration sensor on the inlet side and on the outlet side are determined as being proportional to the average sensor amplitude function, and/or

wherein the operating and evaluation circuit is designed to estimate an average sensor amplitude function $A'_2(f_2, f_1, I_1)$ at the useful mode natural frequency of the first measuring tube pair for the purpose of determining the vibration amplitudes of the vibration sensors of the second measuring tube pair, wherein $f_2$, $f_1$ are the resonance frequencies of the flexural vibration useful modes of the second and of the first measuring tube pair, wherein $I_1$ is an exciter current signal with the useful mode natural frequency of the first measuring tube pair $f_1$, wherein the amplitudes of the vibration sensor on the inlet side and on the outlet side are determined as being proportional to the average sensor amplitude function.

4. Mass flowmeter as claimed in Claim 3, wherein the operating and evaluation circuit is designed to estimate a vibration amplitude $A'_{in,1}$ of a sensor on the inlet side of a first measuring tube pair at the resonance frequency of the second measuring tube pair according to the following formula:

$$A'_{in,1} = A'_1(f_1, f_2, I_2) \cdot \frac{2 \cdot A_{in,1}}{A_{in,1} + A_{out,1}},$$

and to estimate a vibration amplitude $A'_{out,1}$ of a sensor on the outlet side of a first measuring tube pair at the resonance frequency of the second measuring tube pair according to the following formula:

$$A'_{out,1} = A'_1(f_1, f_2, I_2) \cdot \frac{2 \cdot A_{out,1}}{A_{in,1} + A_{out,1}},$$

wherein $A'_1(f_1, f_2, I_2)$ is the frequency-dependent and exciter current-dependent average sensor amplitude function for the first measuring tube pair, and wherein $A_{in,1}$ and $A_{out,1}$ are the sensor signal amplitudes of the sensors on the inlet side and on the outlet side, respectively, at the first resonance frequency, and/or

wherein the operating and evaluation circuit is designed to estimate a vibration amplitude $A'_{in,2}$ of a sensor on the inlet side of a second measuring tube pair at the resonance frequency of the first measuring tube pair according to the following formula:

$$A'_{in,2} = A'_2(f_2, f_1, I_1) \cdot \frac{2 \cdot A_{in,2}}{A_{in,2} + A_{out,2}},$$

and to estimate a vibration amplitude $A'_{out,2}$ of a sensor on the outlet side of a second measuring tube pair at the resonance frequency of the first measuring tube pair according to the following formula:

$$A'_{out,2} = A'_2(f_2, f_1, I_1) \cdot \frac{2 \cdot A_{out,2}}{A_{in,2} + A_{out,2}},$$

wherein $A'_2(f_2, f_1, I_1)$ is the frequency-dependent and exciter current-dependent average sensor amplitude function for the second measuring tube pair, and wherein $A_{in,2}$ and $A_{out,2}$ are the sensor signal amplitudes of the sensors on the inlet side and on the outlet side, respectively, at the resonance frequency of the second measuring tube pair.

5. Mass flowmeter as claimed in one of the previous claims, wherein the operating and evaluation circuit is designed to:

use a signal amplitude of the sensors on the inlet side at the first useful mode natural frequency $f_1$ normalized by a sensitivity constant and the first useful mode natural frequency $f_1$ as a measure for the vibration amplitude $A_{in1}$ of the first sensor on the inlet side, and to use a signal amplitude of the sensors on the outlet side at the first useful mode natural frequency $f_1$ normalized by a sensitivity constant and the first useful mode natural frequency $f_1$ as a measure for the vibration amplitude $A_{out1}$ of the first sensor on the outlet side; and/or use a signal amplitude of the sensors on the inlet side at the second useful mode natural frequency $f_2$ normalized by a sensitivity constant and the useful mode natural frequency $f_2$ as a measure for the vibration amplitude $A_{in2}$ of the second sensor on the inlet side, and to use a signal amplitude of the sensors on the outlet side at the second useful mode natural frequency $f_2$ normalized by a sensitivity constant and the second useful mode natural frequency $f_2$ as a measure for the vibration amplitude $A_{out2}$ of the second sensor on the outlet side.

6. Mass flowmeter as claimed in one of the Claims 3 to 5, wherein the average sensor amplitude function $A'_1(f_1, f_2, I_2)$ for the first measuring tube pair is defined by the following formula:

$$A'_1 = \frac{e_{D,1} \cdot I_2 \cdot k_{N,1}}{\left|1 - \left(\frac{f_2}{f_1}\right)^2\right|},$$

wherein $e_{D,1}$ is an exciter efficiency for the first measuring tube pair and wherein $k_{N,1}$ is an elasticity of the first measuring tube pair for the flexural vibration useful mode, and/or wherein the average sensor amplitude function $A'_2(f_2, f_1, I_1)$ for the second measuring tube pair is defined by the following formula:

$$A'_2 = \frac{e_{D,2} \cdot I_1 \cdot k_{N,2}}{\left|1 - \left(\frac{f_1}{f_2}\right)^2\right|},$$

wherein $e_{D,2}$ is an exciter efficiency for the second measuring tube pair and $k_{N,2}$ is an elasticity of the second measuring tube pair for the flexural vibration useful mode.

7. Mass flowmeter as claimed in one of the Claims 3 to 5,

wherein the average sensor amplitude function $A'_1(f_1, f_2, I_2)$ for the first measuring tube pair further depends on the quality $Q_1$ of the first measuring tube pair and is defined by the following formula:

$$A_1'(f_1, f_2, I_2, Q_1) = \frac{e_{D,1} \cdot I_2 \cdot k_{N,1}}{\left[\left(1 - \left(\frac{f_2}{f_1}\right)^2\right)^2 + \left(\frac{\left(\frac{f_2}{f_1}\right)}{Q_1}\right)^2\right]^{1/2}},$$

wherein $e_{D,1}$ is an exciter efficiency for the first measuring tube pair and $k_{N,1}$ is an elasticity of the first measuring tube pair for the flexural vibration useful mode,
and wherein the quality $Q_1$ of the first measuring tube pair can be determined as follows:

$$Q_1 = \frac{A_{in1} + A_{out1}}{2 \cdot e_{D,1} \cdot I_1 \cdot k_{N,1}}$$

and/or
wherein the average sensor amplitude function $A'_2(f_2, f_1, I_1)$ for the second measuring tube pair further depends on the quality $Q_2$ of the second measuring tube pair and is defined by the following formula:

$$A_2'(f_2, f_1, I_1, Q_2) = \frac{e_{D,2} \cdot I_1 \cdot k_{N,2}}{\left[\left(1 - \left(\frac{f_1}{f_2}\right)^2\right)^2 + \left(\frac{\left(\frac{f_1}{f_2}\right)}{Q_2}\right)^2\right]^{1/2}},$$

wherein $e_{D,2}$ is an exciter efficiency for the second measuring tube pair and $k_{N,2}$ is an elasticity of the second measuring tube pair for the flexural vibration useful mode, and the quality $Q_2$ of the second measuring tube pair can be determined as follows:

$$Q_2 = \frac{A_{in2} + A_{out2}}{2 \cdot e_{D,2} \cdot I_2 \cdot k_{N,2}}$$

8. Mass flowmeter as claimed in Claim 3 or a claim dependent on Claim 3, wherein the operating and evaluation circuit is designed to determine a proportionality factor $F_{1-2}$ of the zero point error contribution of the first measuring tube pair to the zero point error of the second measuring tube pair according to the following formula:

$$F_{1-2} = \frac{A'_{in,1}}{A_{in,2}} - \frac{A'_{out,1}}{A_{out,2}}$$

or:

$$F_{1-2} = \frac{2 A'_1}{A_{in,1} + A_{out,1}} \cdot \left(\frac{A_{in,1}}{A_{in,2}} - \frac{A_{out,1}}{A_{out,2}}\right)$$

and/or
wherein the operating and evaluation circuit is designed to determine a proportionality factor $F_{2-1}$ of the zero point error contribution of the second measuring tube pair to the zero point error of the first measuring tube pair according to the following formula:

$$F_{2-1} = \frac{A'_{in,2}}{A_{in,1}} - \frac{A'_{out,2}}{A_{out,1}}$$

or:

$$F_{2-1} = \frac{2\,A'_2}{A_{in,2} + A_{out,2}} \cdot \left( \frac{A_{in,2}}{A_{in,1}} - \frac{A_{out,2}}{A_{out,1}} \right).$$

9.  Mass flowmeter as claimed in Claim 8, wherein the operating and evaluation circuit is designed to calculate a zero point delay time corresponding to the zero point error contribution of the first measuring tube pair to the zero point error of the second measuring tube pair according to the following formula:

$$\tau_{1-2} = \frac{F_{1-2}}{2\pi \cdot f_2},$$

wherein the operating and evaluation circuit is designed to calculate a zero point delay time $\tau_{2-1}$ corresponding to the zero point error contribution of the second measuring tube pair to the zero point error of the first measuring tube pair according to the following formula:

$$\tau_{2-1} = \frac{F_{2-1}}{2\pi \cdot f_1}$$

and
wherein the operating and evaluation circuit is designed to correct flow-dependent delay times, determined during the measuring mode, between the sensor signals at the useful mode natural frequencies of the first and of the second measuring tube pair $\tau_{m1}$, $\tau_{m2}$ by the zero point delay times $\tau_{1-2}$, $\tau_{2-1}$, in order to calculate, on the basis of the corrected delay times $\tau_{korr1}$, $\tau_{korr2}$, the mass flow through the respective measuring tube pair, wherein $\tau_{korr1} = \tau_{m1} - \tau_{m2-1}$ and Tkorr2 = Tm2 - $\tau_{m1-2}$.

10. Procedure for the determination of a mass flow measured value using a mass flowmeter operating according to the Coriolis principle, particularly as claimed in one of the previous claims, wherein the measuring device has two measuring tube pairs, each with two measuring tubes, mounted in a way that they can vibrate in relation to one another with a flexural vibration useful mode, wherein the flexural vibration useful modes of the two measuring tube pairs have useful mode natural frequencies ($f_1$, $f_2$) that are different from one another, wherein the two measuring tube pairs each have an electrodynamic exciter to excite flexural vibrations between the measuring tubes of a measuring tube pair, wherein the two exciters are connected in series by means of a excitation conductor loop, wherein the measuring tube pairs each have a vibration sensor pair with a vibration sensor on the inlet side and a vibration sensor on the outlet side to measure flexural vibrations at two positions of a measuring tube pair; wherein a sensor signal path on the inlet side is configured to transmit signals of the vibration sensors on the inlet side in a superimposed manner, wherein a sensor signal path on the outlet side is configured to transmit signals of the vibration sensors on the outlet side in a superimposed manner, wherein the procedure comprises the following steps:

Activation of the two electrodynamic exciters with a common exciter signal, wherein the exciter signal serves to excite the flexural vibration useful modes of the two measuring tube pairs (410);
Recording of superimposed sensor signals of the two vibration sensors on the inlet side (420);
Recording of superimposed sensor signals of the two vibration sensors on the outlet side (430);
Determination of flow-dependent phase differences between the signals of the vibration sensors on the inlet side and on the outlet side of the vibration sensors pairs (440) to determine mass flow measured values on the basis of these flow-dependent phase differences;
wherein the sensor signals have, in the event of vibrations at the first useful mode natural frequency $f_1$, a first signal amplitude ratio between the signals of the sensors on the inlet side and the signals of the sensors on the outlet side,
wherein the sensor signals have, in the event of vibrations at the second useful mode natural frequency $f_2$, a second signal amplitude ratio between the signals of the sensors on the inlet side and the signals of the sensors on the outlet side,
Performance of a zero point correction (450) for a first of the measuring tube pairs and/or a second of the measuring tube pairs taking into account the first and the second signal amplitude ratio when determining the mass flow measured values on the basis of flow-dependent phase differences,

wherein the zero point correction for the first measuring tube pair and/or the second measuring tube pair is performed depending on a deviation of the signal amplitude ratios from one another.

11. Procedure as claimed in Claim 10,

wherein the zero point correction for the first measuring tube pair has a term that depends on the current vibration amplitudes of the vibration sensors of the second measuring tube pair at the first useful mode natural frequency $f_1$ in relation to the current vibration amplitudes of the vibration sensors of the first measuring tube pair at the first useful mode natural frequency, and/or
wherein the zero point correction for the second measuring tube pair has a term that depends on the current vibration amplitudes of the vibration sensors of the first measuring tube pair at the second useful mode natural frequency in relation to the current vibration amplitudes of the vibration sensors of the second measuring tube pair at the second useful mode natural frequency.

12. Procedure as claimed in one of the Claims 10 or 11,

wherein, to determine the vibration amplitudes of the vibration sensors of the first measuring tube pair, an average sensor amplitude function $A'_1(f_1, f_2, I_2)$ is estimated at the useful mode natural frequency of the second measuring tube pair, wherein $f_1$, $f_2$ are the resonance frequencies of the flexural vibration useful modes of the first and of the second measuring tube pair, wherein $I_2$ is an exciter current signal with the useful mode natural frequency of the second measuring tube pair $f_2$, wherein the amplitudes of the vibration sensor on the inlet side and on the outlet side are determined as being proportional to the average sensor amplitude function, and/or
wherein, to determine the vibration amplitudes of the vibration sensors of the second measuring tube pair, an average sensor amplitude function $A'_2(f_2, f_1, I_1)$ is estimated at the useful mode natural frequency of the first measuring tube pair, wherein $f_2$, $f_1$ are the resonance frequencies of the flexural vibration useful modes of the second and of the first measuring tube pair, respectively, wherein $I_1$ is an exciter current signal with the useful mode natural frequency of the first measuring tube pair $f_1$, wherein the amplitudes of the vibration sensor on the inlet side and on the outlet side are determined as being proportional to the average sensor amplitude function.

13. Procedure as claimed in one of the Claims 10 to 12, wherein a vibration amplitude $A'_{in,1}$ of a sensor on the inlet side of a first measuring tube pair at the resonance frequency of the second measuring tube pair is estimated according to the following formula:

$$A'_{in,1} = A'_1(f_1, f_2, I_2) \cdot \frac{2 \cdot A_{in,1}}{A_{in,1} + A_{out,1}},$$

and a vibration amplitude $A'_{out,1}$ of a sensor on the outlet side of a first measuring tube pair at the resonance frequency of the second measuring tube pair is estimated according to the following formula:

$$A'_{out,1} = A'_1(f_1, f_2, I_2) \cdot \frac{2 \cdot A_{out,1}}{A_{in,1} + A_{out,1}}$$

wherein $A'_1(f_1, f_2, I_2)$ is the frequency-dependent and exciter current-dependent average sensor amplitude function for the first measuring tube pair, and wherein $A_{in,1}$ and $A_{out,1}$ are the sensor signal amplitudes of the sensors on the inlet side and on the outlet side, respectively, for the first resonance frequency, and/or
wherein a vibration amplitude $A'_{in,2}$ of a sensor on the inlet side of a second measuring tube pair at the resonance frequency of the first measuring tube pair is estimated according to the following formula:

$$A'_{in,2} = A'_2(f_2, f_1, I_1) \cdot \frac{2 \cdot A_{in,2}}{A_{in,2} + A_{out,2}}$$

and a vibration amplitude $A'_{out,2}$ of a sensor on the outlet side of a second measuring tube pair at the resonance frequency of the first measuring tube pair is estimated according to the following formula:

$$A'_{out,2} = A'_2(f_2, f_1, I_1) \cdot \frac{2 \cdot A_{out,2}}{A_{in,2} + A_{out,2}} ,$$

wherein $A'_2(f_2, f_1, I_1)$ is the frequency-dependent and exciter current-dependent average sensor amplitude function for the second measuring tube pair, and wherein $A_{in,2}$ and $A_{out,2}$ are the sensor signal amplitudes of the sensors on the inlet side and on the outlet side, respectively, at the resonance frequency of the second measuring tube pair.

14. Procedure as claimed in Claim 16 or a claim dependent on Claim 17, wherein a proportionality factor $F_{1-2}$ of the zero point error contribution of the first measuring tube pair to the zero point error of the second measuring tube pair is determined according to the following formula:

$$F_{1-2} = \frac{A'_{in,1}}{A_{in,2}} - \frac{A'_{out,1}}{A_{out,2}}$$

or:

$$F_{1-2} = \frac{2 A'_1}{A_{in,1} + A_{out,1}} \cdot \left( \frac{A_{in,1}}{A_{in,2}} - \frac{A_{out,1}}{A_{out,2}} \right)$$

and/or
wherein a proportionality factor $F_{2-1}$ of the zero point error contribution of the second measuring tube pair to the zero point error of the first measuring tube pair is determined according to the following formula:

$$F_{2-1} = \frac{A_{in,2}}{A_{in,1}} - \frac{A_{out,2}}{A_{out,1}}$$

or:

$$F_{2-1} = \frac{2 A'_2}{A_{in,2} + A_{out,2}} \cdot \left( \frac{A_{in,2}}{A_{in,1}} - \frac{A_{out,2}}{A_{out,1}} \right)$$

15. Procedure as claimed in Claim 14, wherein a zero point delay time $\tau_{1-2}$ corresponding to the zero point error contribution of the first measuring tube pair to the zero point error of the second measuring tube pair is calculated according to the following formula:

$$\tau_{1-2} = \frac{F_{1-2}}{2\pi \cdot f_2},$$

wherein a zero point delay time $\tau_{2-1}$ corresponding to the zero point error contribution of the second measuring tube pair to zero point error of the first measuring tube pair is calculated according to the following formula:

$$\tau_{2-1} = \frac{F_{2-1}}{2\pi \cdot f_1},$$

and
wherein flow-dependent delay times, determined in the measuring mode, between the sensor signals at the useful mode natural frequencies of the first and of the second measuring tube pair $\tau_{m1}$, $\tau_{m2}$ are corrected by the zero point delay times $\tau_{1-2}$, $\tau_{2-1}$, in order to calculate, on the basis of the corrected delay times $\tau_{korr1}$, $\tau_{korr2}$, the mass flow through the respective measuring tube pair, wherein Tkorr1 = Tm1 - $\tau_{m2-1}$ and Tkorr2 = Tm2 - $\tau_{m1-2}$.

**Revendications**

1. Débitmètre massique (100) d'après le principe de Coriolis, lequel débitmètre est destiné à la détermination d'une valeur mesurée de débit massique d'un produit traversant le débitmètre massique, le débitmètre comprenant :

   une première paire de tubes de mesure (110a, 110b) avec deux tubes de mesure montés de manière à pouvoir vibrer l'un par rapport à l'autre avec un mode utile de vibration de flexion qui présente une première fréquence propre de mode utile $f_1$ dépendant du produit ;
   un premier excitateur électrodynamique (140a) destiné à générer des vibrations de flexion entre les tubes de mesure de la première paire de tubes de mesure ;
   une première paire de capteurs de vibrations (142a-1, 142a-2) comprenant un premier capteur de vibrations côté entrée et un premier capteur de vibrations côté sortie, lesquels capteurs sont destinés à mesurer les vibrations de flexion à deux positions de la première paire de tubes de mesure ;
   une deuxième paire de tubes de mesure (110a, 110b) avec deux tubes de mesure montés de manière à pouvoir vibrer l'un par rapport à l'autre avec un mode utile de vibration de flexion qui présente une deuxième fréquence propre de mode utile $f_2$ dépendant du produit,
   un deuxième excitateur électrodynamique (140c) destiné à générer des vibrations de flexion entre les tubes de mesure de la deuxième paire de tubes de mesure ;
   une deuxième paire de capteurs de vibrations (142a-1, 142a-2) comprenant un deuxième capteur de vibrations côté entrée et un deuxième capteur de vibrations côté sortie, lesquels capteurs sont destinés à mesurer les vibrations de flexion à deux positions de la deuxième paire de tubes de mesure ;
   un circuit d'exploitation et d'évaluation (160) destiné à

   - commander le premier et le deuxième excitateur électrodynamique avec un signal d'excitation commun, et lequel circuit est destiné à mesurer les signaux des capteurs de vibrations
   - déterminer des différences de phase dépendant du débit entre les signaux des capteurs de vibrations côté entrée et côté sortie d'une des paires de capteurs de vibrations et à déterminer des valeurs mesurées de débit massique sur la base de ces différences de phase dépendant du débit ;

   le signal d'excitation servant à générer les modes utiles de vibration de flexion des deux paires de tubes de mesure ;
   un trajet de signal d'excitation étant conçu pour transmettre le signal d'excitation au premier et au deuxième excitateur électrodynamique ;
   un trajet de signal de capteur côté entrée étant conçu pour transmettre des signaux du premier et du deuxième capteur de vibrations côté entrée de manière superposée ;
   un trajet de signal de capteur côté sortie étant conçu pour transmettre des signaux du premier et du deuxième capteur de vibrations côté sortie de manière superposée ;
   les signaux de capteur présentant, en cas de vibrations à la première fréquence propre du mode utile $f_1$, un premier rapport d'amplitude de signal entre les signaux des capteurs côté entrée et les signaux des capteurs côté sortie,
   les signaux de capteur présentant, en cas de vibrations à la deuxième fréquence propre du mode utile $f_2$, un deuxième rapport d'amplitude de signal entre les signaux des capteurs côté entrée et les signaux des capteurs côté sortie,
   le circuit d'exploitation et d'évaluation étant conçu pour effectuer une correction du point zéro pour la première paire de tubes de mesure et/ou la deuxième paire de tubes de mesure lors de la détermination des valeurs mesurées de débit massique sur la base des différences de phase dépendant du débit, en tenant compte du premier et du deuxième rapport d'amplitude de signal,
   le circuit d'exploitation et d'évaluation étant conçu pour effectuer la correction du point zéro pour la première paire de tubes de mesure et/ou la deuxième paire de tubes de mesure en fonction d'un écart des rapports d'amplitude des signaux entre eux.

2. Débitmètre massique selon la revendication 1,

   pour lequel la correction du point zéro pour la première paire de tubes de mesure présente un terme qui dépend des amplitudes de vibration actuelles des capteurs de vibrations de la deuxième paire de tubes de mesure à la première fréquence propre de mode utile $f_1$ par rapport aux amplitudes de vibration actuelles des capteurs de vibrations de la première paire de tubes de mesure à la première fréquence propre de mode utile, et/ou pour lequel la correction du point zéro pour la deuxième paire de tubes de mesure présente un terme qui dépend des amplitudes de vibration actuelles des capteurs de vibrations de la première paire de tubes de mesure à la deuxième fréquence propre de mode utile par rapport aux amplitudes de vibration actuelles des capteurs de vibrations de la deuxième paire de tubes de mesure à la deuxième fréquence propre de mode utile.

3. Débitmètre massique selon l'une des revendications précédentes, pour lequel le circuit d'exploitation et d'évaluation est conçu pour estimer une fonction d'amplitude moyenne de capteur $A'_1(f_1, f_2, I_2)$ à la fréquence propre de mode utile de la deuxième paire de tubes de mesure pour déterminer les amplitudes de vibration des capteurs de vibrations de la première paire de tubes de mesure, $f_1$, $f_2$ étant les fréquences de résonance des modes utiles de vibration de flexion de la première et de la deuxième paire de tubes de mesure, $I_2$ étant un signal de courant d'excitation avec la fréquence propre de mode utile de la deuxième paire de tubes de mesure $f_2$, les amplitudes du capteur de vibrations côté entrée et côté sortie étant déterminées comme étant proportionnelles à la fonction d'amplitude moyenne du capteur,
et/ou
le circuit d'exploitation et d'évaluation étant conçu pour estimer, pour la détermination des amplitudes de vibration des capteurs de vibrations de la deuxième paire de tubes de mesure, une fonction d'amplitude moyenne de capteur $A'_2(f_2, f_1, I_1)$ à la fréquence propre de mode utile de la première paire de tubes de mesure, $f_2$, $f_1$ étant les fréquences de résonance des modes utiles de vibration de flexion de la deuxième et de la première paire de tubes de mesure, $I_1$ étant un signal de courant d'excitation avec la fréquence propre de mode utile de la première paire de tubes de mesure $f_1$, les amplitudes du capteur de vibrations côté entrée et côté sortie étant déterminées comme étant proportionnelles à la fonction d'amplitude moyenne du capteur.

4. Débitmètre massique selon la revendication 3, pour lequel le circuit d'exploitation et d'évaluation est conçu pour estimer une amplitude de vibration $A'_{in,1}$ d'un capteur côté entrée d'une première paire de tubes de mesure à la fréquence de résonance de la deuxième paire de tubes de mesure selon la formule suivante :

$$A'_{in,1} = A'_1(f_1, f_2, I_2) \cdot \frac{2 \cdot A_{in,1}}{A_{in,1} + A_{out,1}},$$

et pour estimer une amplitude de vibration $A'_{out,1}$ d'un capteur côté sortie d'une première paire de tubes de mesure à la fréquence de résonance de la deuxième paire de tubes de mesure selon la formule suivante :

$$A'_{out,1} = A'_1(f_1, f_2, I_2) \cdot \frac{2 \cdot A_{out,1}}{A_{in,1} + A_{out,1}},$$

$A'_1(f_1, f_2, I_2)$ étant est la fonction d'amplitude moyenne de capteur dépendant de la fréquence et dépendant du courant d'excitation pour la première paire de tubes de mesure, et $A_{in,1}$ et $A_{out,1}$ étant les amplitudes de signal des capteurs côté entrée et côté sortie respectivement à la première fréquence de résonance,
et/ou
le circuit d'exploitation et d'évaluation étant conçu pour estimer une amplitude de vibration $A'_{in,2}$ d'un capteur côté entrée d'une deuxième paire de tubes de mesure à la fréquence de résonance de la première paire de tubes de mesure selon la formule suivante :

$$A'_{in,2} = A'_2(f_2, f_1, I_1) \cdot \frac{2 \cdot A_{in,2}}{A_{in,2} + A_{out,2}},$$

et pour estimer une amplitude de vibration $A'_{out,2}$ d'un capteur côté sortie d'une deuxième paire de tubes de mesure à la fréquence de résonance de la première paire de tubes de mesure selon la formule suivante :

$$A'_{out,2} = A'_2(f_2, f_1, I_1) \cdot \frac{2 \cdot A_{out,2}}{A_{in,2} + A_{out,2}},$$

$A'_2(f_2, f_1, I_1)$ étant la fonction d'amplitude moyenne de capteur dépendant de la fréquence et dépendant du courant d'excitation pour la deuxième paire de tubes de mesure, $A_{in,2}$ et $A_{out,2}$ étant les amplitudes de signal des capteurs côté entrée et côté sortie respectivement à la fréquence de résonance de la deuxième paire de tubes de mesure.

5. Débitmètre massique selon l'une des revendications précédentes, pour lequel le circuit d'exploitation et d'évaluation est conçu pour :

utiliser une amplitude de signal des capteurs côté entrée à la première fréquence propre de mode utile $f_1$ normalisée par une constante de sensibilité et la première fréquence propre de mode utile $f_1$ comme mesure de l'amplitude de vibration $A_{in1}$ du premier capteur côté entrée, et pour utiliser une amplitude de signal des capteurs côté sortie à la première fréquence propre de mode utile $f_1$ normalisée par une constante de sensibilité et la première fréquence propre de mode utile $f_1$ comme mesure de l'amplitude de vibration $A_{out1}$ du premier capteur côté sortie ; et/ou

utiliser une amplitude de signal des capteurs côté entrée à la deuxième fréquence propre de mode utile $f_2$ normalisée avec une constante de sensibilité et la fréquence propre de mode utile $f_2$ comme mesure pour l'amplitude de vibration $A_{in2}$ du deuxième capteur côté entrée, et pour utiliser une amplitude de signal des capteurs côté sortie à la deuxième fréquence propre de mode utile $f_2$ normalisée avec une constante de sensibilité et la deuxième fréquence propre de mode utile $f_2$ comme mesure pour l'amplitude de vibration $A_{out2}$ du deuxième capteur côté sortie.

6. Débitmètre massique selon l'une des revendications 3 à 5, pour lequel la fonction d'amplitude moyenne de capteur $A'_1(f_1, f_2, I_2)$ pour la première paire de tubes de mesure est définie par la formule suivante :

$$A'_1 = \frac{e_{D,1} \cdot I_2 \cdot k_{N,1}}{\left| 1 - \left( \frac{f_2}{f_1} \right)^2 \right|} ,$$

$e_{D,1}$ étant une efficacité d'excitation pour la première paire de tubes de mesure et $k_{N,1}$ étant une élasticité de la première paire de tubes de mesure pour le mode utile de vibration de flexion,
et/ou
la fonction d'amplitude moyenne de capteur $A'_2(f_2, f_1, I_1)$ pour la deuxième paire de tubes de mesure étant définie par la formule suivante :

$$A'_2 = \frac{e_{D,2} \cdot I_1 \cdot k_{N,2}}{\left| 1 - \left( \frac{f_1}{f_2} \right)^2 \right|} ,$$

$e_{D,2}$ étant une efficacité d'excitation pour la deuxième paire de tubes de mesure et $k_{N,2}$ étant une élasticité de la deuxième paire de tubes de mesure pour le mode utile de vibration de flexion.

7. Débitmètre massique selon l'une des revendications 3 à 5,

pour lequel la fonction d'amplitude moyenne de capteur $A'_1(f_1, f_2, I_2)$ pour la première paire de tubes de mesure dépend en outre du facteur de qualité $Q_1$ de la première paire de tubes de mesure et est définie par la formule suivante :

$$A'_1(f_1, f_2, I_2, Q_1) = \frac{e_{D,1} \cdot I_2 \cdot k_{N,1}}{\left[ \left( 1 - \left( \frac{f_2}{f_1} \right)^2 \right)^2 + \left( \frac{\left( \frac{f_2}{f_1} \right)}{Q_1} \right)^2 \right]^{1/2}} ,$$

$e_{D,1}$ étant une efficacité d'excitation pour la première paire de tubes de mesure et $k_{N,1}$ étant une élasticité de la première paire de tubes de mesure pour le mode utile de vibration de flexion,
et la qualité $Q_1$ de la première paire de tubes de mesure pouvant être déterminée comme suit :

$$Q_1 = \frac{A_{in1} + A_{out1}}{2 \cdot e_{D,1} \cdot I_1 \cdot k_{N,1}}$$

et/ou

pour lequel la fonction d'amplitude moyenne de capteur $A'_2(f_2, f_1, I_1)$ pour la deuxième paire de tubes de mesure dépend en outre du facteur de qualité $Q_2$ de la deuxième paire de tubes de mesure et est définie par la formule suivante :

$$A'_2(f_2, f_1, I_1, Q_2) = \frac{e_{D,2} \cdot I_1 \cdot k_{N,2}}{\left[ \left(1 - \left(\frac{f_1}{f_2}\right)^2\right)^2 + \left(\frac{\left(\frac{f_1}{f_2}\right)}{Q_2}\right)^2 \right]^{1/2}},$$

$e_{D,2}$ étant une efficacité d'excitation pour la deuxième paire de tubes de mesure et $k_{N,2}$ étant une élasticité de la deuxième paire de tubes de mesure pour le mode utile de vibration de flexion, et le facteur de qualité $Q_2$ de la deuxième paire de tubes de mesure pouvant être déterminé comme suit :

$$Q_2 = \frac{A_{in2} + A_{out2}}{2 \cdot e_{D,2} \cdot I_2 \cdot k_{N,2}}$$

8. Débitmètre massique selon la revendication 3 ou une revendication dépendante de la revendication 3, dans lequel le circuit d'exploitation et d'évaluation est conçu pour déterminer un facteur de proportionnalité $F_{1\text{-}2}$ de la contribution à l'erreur de zéro de la première paire de tubes de mesure à l'erreur de zéro de la deuxième paire de tubes de mesure selon la formule suivante :

$$F_{1-2} = \frac{A'_{in,1}}{A_{in,2}} - \frac{A'_{out,1}}{A_{out,2}}$$

ou :

$$F_{1-2} = \frac{2 A'_1}{A_{in,1} + A_{out,1}} \cdot \left( \frac{A_{in,1}}{A_{in,2}} - \frac{A_{out,1}}{A_{out,2}} \right)$$

et/ou

le circuit d'exploitation et d'évaluation étant conçu pour déterminer un facteur de proportionnalité $F_{2\text{-}1}$ de la contribution à l'erreur de zéro de la deuxième paire de tubes de mesure à l'erreur de zéro de la première paire de tubes de mesure selon la formule suivante :

$$F_{2-1} = \frac{A'_{in,2}}{A_{in,1}} - \frac{A'_{out,2}}{A_{out,1}}$$

ou :

$$F_{2-1} = \frac{2 A'_2}{A_{in,2} + A_{out,2}} \cdot \left( \frac{A_{in,2}}{A_{in,1}} - \frac{A_{out,2}}{A_{out,1}} \right).$$

9. Débitmètre massique selon la revendication 8, pour lequel le circuit d'exploitation et d'évaluation est conçu pour calculer un temps de retard de zéro correspondant à la contribution de l'erreur de zéro de la première paire de tubes de mesure à l'erreur de zéro de la deuxième paire de tubes de mesure selon la formule suivante :

$$\tau_{1-2} = \frac{F_{1-2}}{2\pi \cdot f_2},$$

le circuit d'exploitation et d'évaluation étant conçu pour calculer un temps de retard de zéro $\tau_{2-1}$ correspondant à la contribution de l'erreur de zéro de la deuxième paire de tubes de mesure à l'erreur de zéro de la première paire de tubes de mesure selon la formule suivante :

$$\tau_{2-1} = \frac{F_{2-1}}{2\pi \cdot f_1}$$

et

le circuit d'exploitation et d'évaluation étant conçu pour corriger des temps de retard dépendant du débit, déterminés en mode de mesure, entre les signaux de capteur aux fréquences propres de mode utile de la première et de la deuxième paire de tubes de mesure $\tau_{m1}$, $\tau_{m2}$ par les temps de retard de point zéro $\tau_{1-2}$, $\tau_{2-1}$, afin de calculer le débit massique à travers la paire de tubes de mesure respective sur la base des temps de retard corrigés, avec Tkorr1 = Tm1 - $\tau_{m2-1}$ et Tkorr2 = Tm2 - $\tau_{m1-2}$.

10. Procédé destiné à la détermination d'une valeur mesurée de débit massique au moyen d'un débitmètre massique fonctionnant selon le principe de Coriolis, notamment selon l'une des revendications précédentes, l'appareil de mesure présentant deux paires de tubes de mesure avec respectivement deux tubes de mesure montés de manière à pouvoir vibrer l'un par rapport à l'autre avec un mode utile de vibration de flexion, les modes utiles de vibration de flexion des deux paires de tubes de mesure présentant des fréquences propres de mode utile $(f_1, f_2)$ différentes les unes des autres, les deux paires de tubes de mesure présentant chacune un excitateur électrodynamique pour exciter des vibrations de flexion entre les tubes de mesure d'une paire de tubes de mesure, les deux excitateurs étant montés en série par l'intermédiaire d'une boucle de conducteur d'excitation, les paires de tubes de mesure présentant chacune une paire de capteurs de vibrations avec un capteur de vibrations côté entrée et un capteur de vibrations côté sortie pour mesurer les vibrations de flexion en deux positions d'une paire de tubes de mesure ; un trajet de signal de capteur côté entrée étant adapté pour transmettre des signaux des capteurs de vibrations côté entrée en superposition, un trajet de signal de capteur côté sortie étant adapté pour transmettre des signaux des capteurs de vibrations côté sortie de manière superposée, le procédé comprenant les étapes suivantes :

Commande des deux excitateurs électrodynamiques avec un signal d'excitation commun, le signal d'excitation servant à exciter les modes utiles de vibration de flexion des deux paires de tubes de mesure (410) ;
Acquisition de signaux superposés des deux capteurs de vibrations côté entrée (420) ;
Acquisition de signaux superposés des deux capteurs de vibrations côté sortie (430) ;
Détermination des différences de phase dépendant du débit entre les signaux des capteurs de vibrations côté entrée et côté sortie des paires de capteurs de vibrations (440) pour déterminer des valeurs mesurées de débit massique sur la base de ces différences de phase dépendant du débit ;
les signaux de capteur présentant, en cas de vibrations à la première fréquence propre de mode utile $f_1$, un premier rapport d'amplitude de signal entre les signaux des capteurs côté entrée et les signaux des capteurs côté sortie,
les signaux de capteur présentant, en cas de vibrations à la deuxième fréquence propre de mode utile $f_2$, un deuxième rapport d'amplitude de signal entre les signaux des capteurs côté entrée et les signaux des capteurs côté sortie,
Réalisation d'une correction du point zéro (450) pour une première des paires de tubes de mesure et/ou une deuxième des paires de tubes de mesure en tenant compte du premier et du deuxième rapport d'amplitude des signaux lors de la détermination des valeurs mesurées de débit massique sur la base des différences de phase dépendant du débit,

la correction du point zéro pour la première paire de tubes de mesure et/ou la deuxième paire de tubes de mesure s'effectuant en fonction d'un écart des rapports d'amplitude des signaux entre eux.

11. Procédé selon la revendication 10,

pour lequel la correction du point zéro pour la première paire de tubes de mesure présente un terme qui dépend des amplitudes de vibration actuelles des capteurs de vibrations de la deuxième paire de tubes de mesure à la première fréquence propre du mode utile $f_1$ par rapport aux amplitudes de vibration actuelles des capteurs de vibrations de la première paire de tubes de mesure à la première fréquence propre du mode utile, et/ou pour lequel la correction du point zéro pour la deuxième paire de tubes de mesure présente un terme qui dépend des amplitudes de vibration actuelles des capteurs de vibrations de la première paire de tubes de mesure à la deuxième fréquence propre du mode utile par rapport aux amplitudes de vibration actuelles des capteurs de vibrations de la deuxième paire de tubes de mesure à la deuxième fréquence propre du mode utile.

**12.** Procédé selon l'une des revendications 10 ou 11,

pour lequel, pour déterminer les amplitudes de vibration des capteurs de vibrations de la première paire de tubes de mesure, on estime une fonction d'amplitude de capteur moyenne $A'_1(f_1, f_2, I_2)$ à la fréquence propre de mode utile de la deuxième paire de tubes de mesure, $f_1$, $f_2$ étant les fréquences de résonance des modes utiles de vibration de flexion de la première et de la deuxième paire de tubes de mesure, $I_2$ étant un signal de courant d'excitation avec la fréquence propre de mode utile de la deuxième paire de tubes de mesure $f_2$, les amplitudes du capteur de vibrations côté entrée et côté sortie étant déterminées comme étant proportionnelles à la fonction d'amplitude moyenne du capteur,
et/ou
pour lequel, pour déterminer les amplitudes de vibration des capteurs de vibrations de la deuxième paire de tubes de mesure, une fonction d'amplitude de capteur moyenne $A'_2(f_2, f_1, I_1)$ est estimée à la fréquence propre de mode utile de la première paire de tubes de mesure, $f_2$, $f_1$ étant les fréquences de résonance des modes utiles de vibration de flexion respectivement de la deuxième et de la première paire de tubes de mesure, $I_1$ étant un signal de courant d'excitation avec la fréquence propre de mode utile de la première paire de tubes de mesure $f_1$, les amplitudes du capteur de vibrations côté entrée et côté sortie étant déterminées comme étant proportionnelles à la fonction d'amplitude moyenne du capteur.

**13.** Procédé selon l'une des revendications 10 à 12, pour lequel une amplitude de vibration $A'_{in,1}$ d'un capteur côté entrée d'une première paire de tubes de mesure à la fréquence de résonance de la deuxième paire de tubes de mesure est estimée selon la formule suivante :

$$A'_{in,1} = A'_1(f_1, f_2, I_2) \cdot \frac{2 \cdot A_{in,1}}{A_{in,1} + A_{out,1}} ,$$

et une amplitude de vibration $A'_{out,1}$ d'un capteur côté sortie d'une première paire de tubes de mesure à la fréquence de résonance de la deuxième paire de tubes de mesure est estimée selon la formule suivante :

$$A'_{out,1} = A'_1(f_1, f_2, I_2) \cdot \frac{2 \cdot A_{out,1}}{A_{in,1} + A_{out,1}}$$

$A'_1(f_1, f_2, I_2)$ étant la fonction d'amplitude moyenne de capteur dépendant de la fréquence et dépendant du courant d'excitation pour la première paire de tubes de mesure, et $A_{in,1}$ et $A_{out,1}$ étant les amplitudes de signal des capteurs côté entrée et côté sortie respectivement pour la première fréquence de résonance,
et/ou
une amplitude de vibration $A'_{in,2}$ d'un capteur côté entrée d'une deuxième paire de tubes de mesure à la fréquence de résonance de la première paire de tubes de mesure étant estimée selon la formule suivante :

$$A'_{in,2} = A'_2(f_2, f_1, I_1) \cdot \frac{2 \cdot A_{in,2}}{A_{in,2} + A_{out,2}}$$

et une amplitude de vibration $A'_{out,2}$ d'un capteur côté sortie d'une deuxième paire de tubes de mesure à la fréquence de résonance de la première paire de tubes de mesure étant estimée selon la formule suivante :

$$A'_{out,2} = A'_2(f_2, f_1, I_1) \cdot \frac{2 \cdot A_{out,2}}{A_{in,2} + A_{out,2}} ,$$

A'$_2$(f$_2$, f$_1$, I$_1$) étant la fonction d'amplitude moyenne de capteur dépendant de la fréquence et dépendant du courant d'excitation pour la deuxième paire de tubes de mesure, et A$_{in,2}$ et A$_{out,2}$ étant les amplitudes de signal des capteurs côté entrée et côté sortie respectivement à la fréquence de résonance de la deuxième paire de tubes de mesure.

14. Procédé selon la revendication 16 ou une revendication dépendant de la revendication 17, pour lequel un facteur de proportionnalité F$_{1-2}$ de la contribution à l'erreur de zéro de la première paire de tubes de mesure à l'erreur de zéro de la deuxième paire de tubes de mesure est déterminé selon la formule suivante :

$$F_{1-2} = \frac{A'_{in,1}}{A_{in,2}} - \frac{A'_{out,1}}{A_{out,2}}$$

ou :

$$F_{1-2} = \frac{2\,A'_1}{A_{in,1} + A_{out,1}} \cdot \left(\frac{A_{in,1}}{A_{in,2}} - \frac{A_{out,1}}{A_{out,2}}\right)$$

et/ou

pour lequel un facteur de proportionnalité F$_{2-1}$ de la contribution à l'erreur de zéro de la deuxième paire de tubes de mesure à l'erreur de zéro de la première paire de tubes de mesure est déterminé selon la formule suivante :

$$F_{2-1} = \frac{A_{in,2}}{A_{in,1}} - \frac{A_{out,2}}{A_{out,1}}$$

ou :

$$F_{2-1} = \frac{2\,A'_2}{A_{in,2} + A_{out,2}} \cdot \left(\frac{A_{in,2}}{A_{in,1}} - \frac{A_{out,2}}{A_{out,1}}\right)$$

15. Procédé selon la revendication 14, pour lequel un temps de retard de zéro τ$_{1-2}$ correspondant à la contribution de l'erreur de zéro de la première paire de tubes de mesure à l'erreur de zéro de la deuxième paire de tubes de mesure est calculé selon la formule suivante :

$$\tau_{1-2} = \frac{F_{1-2}}{2\pi \cdot f_2},$$

un temps de retard de zéro τ$_{2-1}$ correspondant à la contribution de l'erreur de zéro de la deuxième paire de tubes de mesure à l'erreur de zéro de la première paire de tubes de mesure étant calculé selon la formule suivante :

$$\tau_{2-1} = \frac{F_{2-1}}{2\pi \cdot f_1},$$

et

les temps de retard dépendant du débit, déterminés en mode de mesure, entre les signaux de capteur aux fréquences propres de mode utile de la première et de la deuxième paire de tubes de mesure étant corrigés des temps de retard de point zéro τ$_{1-2}$, τ$_{2-1}$, afin de calculer, sur la base des temps de retard corrigés τ$_{korr1}$, τ$_{korr2}$, le débit massique à travers la paire de tubes de mesure respective, avec Tkorr1 = Tm1 - τ$_{m2-1}$ et Tkorr2 = Tm2 - τ$_{m1-2}$.

100

140a

142a-2
142c-2

110a
110c

142a-1
142c-1

132a

132c

140c

132c

134c

134a

134c

134a

120

122

120

122

**Fig. 1b**

100

110a
110b

123

122

**Fig. 1a**

100

132a

110d
110c
110b
110a

120 132a

122

123

132c
134c
134a

132c 132c

134c

134a

120 122

**Fig. 1c**

100

110c
110b
110a

110d

120

124

120 122

122

123

**Fig. 1d**

Fig. 1e

FIG. 2a

PHASE

SENSORSIGNAL

FIG. 2b

PHASE

SENSORSIGNAL

**Inneres Messrohrpaar**

ZP in PIPO

Differenzabweichung da-di

**FIG. 3a**

**Äußeres Messrohrpaar**

ZP in PIPO

Differenzabweichung da-di

**FIG. 3b**

EP 3 701 232 B1

```
┌─────────────┐
│     410     │
└─────────────┘
       │
       ▼
┌─────────────┐
│     420     │
└─────────────┘
       │
       ▼
┌─────────────┐
│     430     │
└─────────────┘
       │
       ▼
┌─────────────┐
│     440     │
└─────────────┘
       │
       ▼
┌─────────────┐
│     450     │
└─────────────┘
```

**FIG. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004035971 A1
- US 2009272173 A1
- DE 102015104931 A1